Europäisches Patentamt

European Patent Office

Office européen des brevets

(19)

(11) EP 1 225 474 A2

(12) **EUROPÄISCHE PATENTANMELDUNG**

(43) Veröffentlichungstag:
    24.07.2002 Patentblatt 2002/30

(51) Int Cl.⁷: **G02F 1/21**, G02F 1/29,
    G02F 1/05

(21) Anmeldenummer: 02001457.7

(22) Anmeldetag: 21.01.2002

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(30) Priorität: **22.01.2001 DE 10102723**

(71) Anmelder:
    • **Carl Zeiss
      89518 Heidenheim (Brenz) (DE)**
      Benannte Vertragsstaaten:
      **AT BE CH CY DE DK ES FI FR GB GR IE IT LI LU
      MC NL PT SE TR**
    • **Carl-Zeiss-Stiftung, trading as Carl Zeiss
      89518 Heidenheim (Brenz) (DE)**
      Benannte Vertragsstaaten:
      **GB IE**

(72) Erfinder: **Weidlich, Kai, Dr.
    73432 Aalen (DE)**

(74) Vertreter: **Schorr, Frank, Dr. et al
    Diehl Glaeser Hiltl & Partner,
    Augustenstrasse 46
    80333 München (DE)**

(54) **Optischer Strahlablenker**

(57)    Es wird ein Strahlablenker 1 zum Ablenken eines einfallenden Lichtstrahls einer vorbestimmten Wellenlänge (λ) vorgeschlagen, der eine zwischen einem Paar von Elektrodenanordnungen und einem Paar von zueinander planparallelen Spiegeln angeordnete erste Platte aus elektrooptischem Material, dessen Brechungsindex durch Anlegen elektrischer Spannungen an die Elektrodenanordnungen änderbar ist, wobei ein dem einfallenden Lichtstrahl zugewandter erster Spiegel des Spiegelpaars eine geringere Reflektivität aufweist als der zweite Spiegel des Spiegelpaars. Der Strahlablenker zeichnet sich dadurch aus, daß der erste oder/und der zweite Spiegel eine Mehrzahl von Schichten aus dielektrischen Materialien aufweist, wobei sich Brechungsindizes der dielektrischen Materialien benachbarter Schichten voneinander verschieden sind.

    Ferner wird eine Schaltanordnung vorgeschlagen, die eine Mehrzahl von Anschlüssen 53 für optische Signale, mit Anschlußenden 55 zum Austritt oder/und Eintritt der optischen Signale als Lichtstrahlen 9, 17, wobei die Anschlußenden 53 mit Abstand voneineinander an vorbestimmten Positionen angeordnet sind, und eine Mehrzahl von Strahlablenkern 1, wobei die Strahlablenker 1 und die Anschlußenden 55 einander paarweise zugeordnet sind und ein jeder Strahlablenker 1 derart angeordnet ist, daß der aus dem ihm zugeordneten Anschlußende 55 austretende Lichtstrahl 9 auf diesen gerichtet ist, und von denen ein jeder derart ansteuerbar ist, daß er wenigstens einen Teil 17 des auf ihn gerichteten Lichtstrahls 9 in eine auswählbare Richtung lenkt, um ihn in wenigstens ein ausgewähltes Anschlußende 55 eintreten zu lassen. Die Schaltanordnung zeichnet sich dadurch aus, daß der Strahlablenker 1 den auf ihn gerichteten Lichtstrahl 9 im wesentlichen vollständig reflektiert.

Fig. 6

EP 1 225 474 A2

**Beschreibung**

Die Erfindung betrifft einen Strahlablenker zum Ablenken eines Lichtstrahls in eine auswählbare Richtung sowie eine Schaltanordnung mit einer Mehrzahl von Anschlüssen für optische Signale, um über einen oder mehrere Anschlüsse in die Schaltanordnung eintretende optische Signale an auswählbaren anderen Anschlüssen auszugeben. Insbesondere betrifft die Erfindung auch eine Schaltanordnung für Datenkommunikationssysteme mit faseroptischen Schaltsystemen. Ferner betrifft die Erfindung auch ein Verfahren zum Betrieb einer solchen Schaltanordnung, insbesondere für ein faseroptisches Schaltsystem.

Aus B.H. Lee und R.J. Capik "Demonstration of a very low-loss 576x576 servo-controlled, beam-stearing optical switch fabric" ist ein strahlsteuernder Schalter bekannt, der es erlaubt, eine Mehrzahl faseroptischer Eingänge mit ebenfalls einer Mehrzahl faseroptischer Ausgänge wahlweise zu verknüpfen. Hierzu weist ein jeder optischer Eingang einen Kollimator auf, der motorisch so verstellbar ist, daß ein an einem Anschlußende des Eingangs austretender Lichtstrahl auf ein Anschlußende des ausgewählten optischen Ausgangs trifft und in diesen eintritt. Die motorische Verstellung der Vielzahl von Kollimatoren ist mechanisch aufwendig und eine erwünschte Verringerung von Schaltzeiten ist schwierig.

Aus US 5,963,682 ist eine Schaltanordnung zum wahlweisen optischen Verknüpfen von optischen Eingängen mit optischen Ausgängen bekannt, bei der Strahlrichtungen nicht motorisch sondern mit Flüssigkristallzellen und Anlegen bestimmter Spannungs- und Feldmuster an dieselben verstellbar sind. Die dabei eingesetzten Flüssigkristalle weisen einen ausreichenden elektrooptischen Effekt auf, um durch Anlegen elektrischer Feldmuster ausreichende Ablenkwinkel zur wahlweisen Ansteuerung mehrerer Ausgänge zu erreichen. Allerdings beschränkt hier die Trägheit des Flüssigkristalls eine erreichbare Schaltgeschwindigkeit, und ferner treten bei Durchtritt der optischen Signale durch die Schaltanordnung als zu hoch empfundene Verluste an optischer Intensität auf.

Aus US 5,319,492 ist ein optischer Schalter bekannt, bei dem in einer Kavität ein in zweiter Ordnung nichtlineares optisches Polymer eingeschlossen ist, an welches mittels strukturierter Elektroden ein sich räumlich änderndes elektrisches Feld angelegt werden kann, um ein schaltbares Reflexionsgitter zu erzeugen, da der Brechungsindex des Polymers über das Anlegen der elektrischen Felder räumlich variiert werden kann. Die Verspiegelung der Kavität führt dabei zu einer Erhöhung des erreichbaren Ablenkwinkels, da ein einfallender Lichtstrahl mehrmals in der Kavität umläuft, allerdings führt die intrinsische Absorption des Polymermaterials bei mehreren Umläufen des Lichtstrahls im Resonator zu merklichen Intensitätsverlusten, so daß einer Erhöhung des Ablenkwinkels durch die Absorption des Mediums in der Kavität Grenzen gesetzt sind.

Es ist eine Aufgabe der vorliegenden Erfindung, einen Strahlablenker zum Ablenken eines einfallenden Lichtstrahls anzugeben, der insbesondere im Hinblick auf erreichbare Ablenkwinkel oder/und Schaltzeiten verbesserte Eigenschaften aufweist.

Ferner ist eine Aufgabe der Erfindung, einen Strahlablenker bereitzustellen, der für einen Einsatz in optischen Datenkommunikationssystemen besser geeignet ist.

Weiter ist es eine Aufgabe der vorliegenden Erfindung eine Schaltanordung mit einer Mehrzahl von Anschlüssen für optische Signale anzugeben, die insbesondere in optischen Datenkommunikationssystemen mit hohen Übertragungsraten und kurzen Umschaltzeiten einsetzbar ist.

Ferner ist es eine Aufgabe der Erfindung eine Schaltanordnung mit mehreren Anschlüssen für optische Signale anzugeben, welche vergleichsweise geringe Verluste an optischer Intensität ermöglicht.

Unter einem ersten Aspekt geht die Erfindung aus von einem Strahlablenker, der eine zwischen planparallelen Spiegeln angeordnete Platte aus elektrooptischem Material umfaßt, dessen Brechungsindex durch Anlegen eines elektrischen Feldmusters in Erstreckungsrichtung der Platte räumlich änderbar ist. Hierbei weist der dem einfallenden Lichtstrahl zugewandte Spiegel des Spiegelpaares eine geringere Reflektivität auf als der andere Spiegel des Spiegelpaares, weshalb die durch den Strahlablenker reflektierte Intensität des einfallenden Lichtstrahls größer ist als die durch den Strahlablenker transmittierte Intensität des einfallenden Lichtstrahls.

Die Erfindung zeichnet sich hierbei dadurch aus, daß der erste oder/und der zweite Spiegel eine Mehrzahl von Schichten aus dielektrischen Materialien aufweist, deren Brechungsindizes von Schicht zu Schicht unterschiedlich sind.

Der Erfindung liegt der Gedanke zugrunde, daß das elektrooptische Material in einem Resonator hoher Güte angeordnet ist, so daß die Zahl der Umläufe, die Teile des einfallenden Lichtstrahls in dem Resonator vor deren Austritt durchführen, besonders hoch ist. Diese hohe Güte des Resonators wird durch den Einsatz von Spiegeln mit hoher Reflektivität bzw. geringer Resttransmissivität erzielt, was durch den Einsatz von Vielschichtspiegeln aus dielektrischen Materialien unterschiedlicher Brechstärke ermöglicht wird. Die hohe Güte des Resonators und die damit verbundene hohe Zahl an Umläufen des abzulenkenden Strahls verstärkt die Wirkung des elektrooptischen Materials, so daß zum einen die mit diesem Material erreichbaren Ablenkwinkel im Vergleich zu einem lediglich ein oder wenige Male durchlaufenen Material erhöht sind. Ferner ist es möglich, bei einem gegebenen Ablenkwinkel die Dicke des elektrooptischen Materials im Vergleich zu einer Anordnung mit geringerer Resonatorgüte zu reduzieren, was insbesondere dann, wenn das elektrooptische Material ein Flüssigkeitskristall ist, eine Reduzierung der anzulegenden elektrischen Felder und Schaltzeiten ermöglicht.

Ferner ist es möglich, in einem Resonator hoher Güte auch elektrooptische Materialien einzusetzen, die im Vergleich zu den bekannten Flüssigkristallen einen relativ niedrigen elektrooptischen Effekt zeigen, allerdings wesentlich schneller schaltbar sind.

Vorzugsweise ist der Strahlablenker dazu ausgebildet, Licht optischer Wellenlängen abzulenken, und zwar vorzugsweise von Licht in einem Wellenlängenbereich von 0.5 µm bis 3.0 µm, weiter bevorzugt einem Wellenlängenbereich von 1.0 µm bis 2.0 µm und noch stärker bevorzugt einem Wellenlängenbereich von 1.3 µm bis 1.7 µm.

Vorzugsweise werden hierbei elektrooptische Festkörpermaterialien eingesetzt, vorzugsweise Lithiumniobat ($LiNbO_3$) oder/und Galliumarsenid (GaAs).

Im Hinblick auf die Erhöhung der Reflektivität der Spiegel und damit der Güte des Resonators ist vorzugsweise vorgesehen, daß mehrere Schichten aus den dielektrischen Materialien eine Dicke aufweisen, die im wesentlichen einem Wert d entspricht, der der Formel $d = \lambda/4$ genügt, wobei $\lambda$ die Wellenlänge des Lichts des einfallenden Strahls in dem dielektrischen Material der Schicht ist. Hierdurch interferieren die an einer vorderen Grenzfläche und einer rückwärtigen Grenzfläche einer Schicht dieser Dicke d reflektierten Teilstrahlen des einfallenden Lichtstrahls konstruktiv miteinander, während durch die Schichten transmittierte Teilstrahlen destruktiv miteinander interferieren.

Ebenfalls im Hinblick auf die Erhöhung der Güte des Resonators weist die Platte aus dem elektrooptischen Material eine Dicke auf, die im wesentlichen einem Wert D entspricht, der einer der beiden Formeln $D = k/2 * \lambda$ und $D = (2k-1)/4 * \lambda$ genügt, wobei $\lambda$ die Wellenlänge des einfallenden Strahls in dem elektrooptischen Material und k eine natürliche Zahl größer 0 ist. Die erste bzw. zweite der beiden Formeln wird in Abhängigkeit davon ausgewählt, ob die an das elektrooptische Material angrenzenden Materialschichten einen höheren oder niedrigeren Brechungsindex als das elektrooptische Material selbst aufweisen und ob der Aufbau der an die Platte aus elektrooptischem Material angrenzenden Spiegel-Schichtstapel bezüglich der Platte symmetrisch oder unsymmetrisch ist.

Eine einfache Ausgestaltung des Spiegels ergibt sich dann, wenn die Spiegelschichten aus lediglich zwei verschiedenen dielektrischen Materialien gefertigt werden, die alternierend schichtweise aufeinander angeordnet sind. Die Brechungsindizes der beiden Spiegelmaterialien unterscheiden sich möglichst stark voneinander. Vorzugsweise werden Siliziumdioxid ($SiO_2$) und Titanoxid (TiO) als diese Spiegelmaterialien ausgewählt, ebenfalls bevorzugt sind Galliumarsenid (GaAs) und Aluminiumarsenid (AlAs) bzw. Aluminiumgalliumarsenid (AlGaAs).

Im Hinblick auf eine möglichst hohe Intensität des abgelenkten Lichtstrahls ist der von dem einfallenden Lichtstrahl weggewandte Spiegel des Resonators im wesentlichen vollständig reflektierend, wobei allerdings der dem einfallenden Strahl zugewandte Spiegel nicht etwa im Hinblick auf eine noch weitere Steigerung der Güte des Resonators ebenso im wesentlichen vollständig reflektierend ausgebildet ist, sondern eine Resttransmissivität aufweist, die mehr als das 5fache, insbesondere mehr als das 10fache der Resttransmissivität des von dem einfallenden Lichtstrahl abgewandten Spiegels beträgt.

Vorteilhafterweise umfaßt der Strahlablenker eine zweite Platte aus elektrooptischem Material, die in Richtung des einfallenden Lichtstrahls hinter dem zweiten Spiegel angeordnet ist und die in einem weiteren Resonator angeordnet ist, der durch den zweiten Spiegel und einem weiteren zu diesem planparallelen dritten Spiegel gebildet ist.

Vorzugsweise weist dieser zweite Resonator eine höhere Güte als der aus Sicht des einfallenden Strahls darüberliegende erste Resonator auf. Dies wird vorzugsweise dadurch erreicht, daß der dritte Spiegel eine noch höhere Reflektivität aufweist als der zweite Spiegel. Vorzugsweise ist auch hier die Resttransmissivität des dritten Spiegels fünfmal, insbesondere zehnmal geringer als die Resttransmissivität des zweiten Spiegels. Die hohe Güte des zweiten Resonators wird vorzugsweise mit ähnlichen Mitteln erreicht, wie dies bereits in Bezug auf den ersten Resonator vorangehend beschrieben wurde, wobei allerdings die Zahl von Spiegelschichten, zwischen denen die zweite Platte aus elektrooptischem Material angeordnet ist, erhöht ist.

Werden mittels der in der Ebene der Spiegel räumlich strukturierten Elektrodenanordnungen sich in Plattenrichtung ändernde elektrische Felder an das elektrooptische Material angelegt, zeigt das elektrooptische Material einen sich in Plattenrichtung ändernden Brechungsindex, was zu einer sich örtlich ändernden Phasenlage zwischen einfallendem Strahl und aus dem Resonator austretendem Strahl führt. Durch geeignet strukturierte Elektroden und geeignet an diese angelegte Spannungen kann der Strahlablenker somit die Wirkung eines Phasengitters aufweisen, welches die Richtung des den Strahlablenker verlassenden Lichtstrahls in Bezug auf den einfallenden Lichtstrahl ändert. Durch Ändern des angelegten Spannungsmusters kann dann die Richtung des den Strahlablenker verlassenden Lichtstrahls in gewissen Bereichen frei verändert werden.

Um die Richtung des abgelenkten Lichtstrahls in zwei Raumrichtungen zu ändern, besteht jede Elektrodenanordnung aus einer Mehrzahl von parallel nebeneinander angeordneten Streifenelektroden, wobei die Erstreckungsrichtungen der Streifen der beiden Elektrodenanordnungen quer und insbesondere orthogonal zueinander verlaufen. Hierbei ist das elektrooptische Material zwischen den beiden Elektrodenanordnungen vorgesehen.

Diese Ausführung weist im Hinblick auf die Fertigung des Strahlablenkers den Nachteil auf, daß beidseits der Platte aus elektrooptischem Material eine räumlich strukturierte Elektrodenanordnung gefertigt und kontaktiert werden muß.

Unter einem weiteren Aspekt geht die Erfindung von einem Strahlablenker zur Ablenkung eines Lichtstrahls in zwei Raumrichtungen, mit einem zwischen einem Paar von Elektrodenanordnungen und einem Paar planparalleler Spiegel angeordneten Platte aus elektrooptischem Material aus, wobei sich die Erfindung unter diesem Aspekt dadurch auszeichnet, daß lediglich eine der beiden Elektrodenanordnungen in Plattenrichtung räumlich strukturiert ausgebildet ist und die andere Elektrodenanordnung eine im wesentlichen den gesamten für den einfallenden Lichtstrahl wirksamen Bereich des elektrooptischen Materials überdeckt.

Hierbei umfaßt die strukturierte Elektrodenanordnung vorzugsweise zwei Sätze Streifenelektroden, wobei die Streifenelektroden jedes Satzes parallel nebeneinander angeordnet sind und die Erstreckungsrichtungen der Streifenelektroden verschiedener Sätze unter einem Winkel zueinander, insbesondere orthogonal zueinander, verlaufen.

Um durch beide Elektrodensätze unabhängig voneinander elektrische Felder in dem elektrooptischen Material erzeugen zu können, weisen die beiden Elektrodensätze jeweils aktive Bereiche auf, die, projiziert auf die Spiegelebene, nebeneinander angeordnet sind. Aktive Bereiche der Elektrodensätze sind dabei solche Bereiche, an denen sich die Elektroden der Elektrodensätze nicht gegenseitig abschirmen und die somit auf das elektrooptische Material wirken.

Bei der Ausführung der Elektrodensätze als Streifenelektroden ist vorzugsweise vorgesehen, daß die Streifen in ihrer Längsrichtung abwechselnd breite und schmale aktive Bereiche aufweisen, wobei sich die Streifenelektroden verschiedener Sätze mit ihren schmalen Bereichen kreuzend überlappen. Wenigstens in den Kreuzungsbereichen sind die sich kreuzenden Elektroden elektrisch voneinander isoliert.

Unter einem weiteren Aspekt geht die Erfindung von einer Schaltanordnung zum wahlweisen Verschalten einer Mehrzahl von optischen Eingängen mit einer Mehrzahl von optischen Ausgängen aus, wobei eine Mehrzahl von Anschlüssen mit Anschlußenden zum Austritt oder/und Eintritt der optischen Signale als Lichtstrahlen vorgesehen ist und wobei die Anschlußenden mit Abstand voneinander an vorbestimmten Positionen angeordnet sind, und wobei ferner eine Mehrzahl von Strahlablenkern derart vorgesehen ist, daß einem jeden Anschlußende ein separater Strahlablenker zugeordnet ist und der aus dem ihm zugeordneten Anschlußende austretende Lichtstrahl auf diesen gerichtet ist und wobei dieser Strahlablenker derart ansteuerbar ist, daß wenigstens ein Teil des auf ihn gerichteten Lichtstrahls in eine auswählbare Richtung gelenkt wird, um, gegebenenfalls nach weiteren Umlenkungen, in wenigstens ein ausgewähltes Anschlußende einzutreten.

Die Erfindung zeichnet sich hierbei dadurch aus, daß der Strahlablenker in Reflexion arbeitet, d.h. daß der auf ihn gerichtete Lichtstrahl den Strahlablenker im wesentlichen nicht transmittiert, sondern vielmehr der Hauptanteil des auf den Strahlablenker gerichteten Lichtstrahls von diesem zurückgeworfen bzw. reflektiert wird.

Gegenüber dem herkömmlichen Strahlablenker, der in Transmission arbeitet, wobei eine Intensität des transmittierten Nutzstrahles aufgrund von prinzipiell nicht vermeidbaren Reflexionsverlusten reduziert ist, zeichnet sich die erfindungsgemäße Anordnung dadurch aus, daß im wesentlichen die gesamte Intensität des einfallenden Lichtstrahls den Strahlablenker nach der gewünschten Ablenkung auch als Nutzstrahl zur Verfügung steht.

Vorteilhafterweise umfaßt die Schaltanordnung wenigstens einen Spiegel, der derart angeordnet ist, daß ein von einem jeden vorbestimmten Anschlußende austretender Lichtstrahl von dem dem Anschlußende zugeordneten Strahlablenker auf den Spiegel derart gerichtet werden kann, daß der Spiegel diesen Strahl auf einen weiteren Strahlablenker richtet, der dem ausgewählten Anschlußende zugeordnet ist. Mit dieser Anordnung ist es möglich, daß die Lichtstrahlen mit im wesentlichen optimaler Ausrichtung auf das Anschlußende treffen, in welches sie eintreten sollen, womit Einkoppelverluste und damit Übertragungsverluste der Schaltanordnung wesentlich reduziert sind.

Eine besonders einfache Ausgestaltung der Strahlablenkung über den Spiegel ergibt sich dann, wenn wirksame Spiegelflächen dieses Spiegels in Lücken zwischen benachbarten Anschlußenden bzw. den aus diesen aus- bzw. eintretenden Lichtstrahlen angeordnet sind.

Im Hinblick darauf, bei einem gegebenen maximalen Ablenkwinkel der Strahlablenker und einem gegebenen Abstand der von dem Strahlablenker anzusteuernden Anschlußenden eine Baulänge der Schaltanordnung zu reduzieren, ist vorzugsweise zwischen den Anschlußenden und den Strahlablenkern ein Teleskop angeordnet, welches wenigstens eine Objektivlinse aufweist, durch die sämtliche Strahlen, die aus Austrittsenden austreten bzw. in diese eintreten, verlaufen. Das Teleskop kann vom Kepler-Typ, vom Galilei-Typ oder auch einem anderen Teleskop-Typ sein.

Ferner ist es vorteilhaft, für einen jeden Strahlablenker ein separates Teleskop vorzusehen, um einen Strahldurchmesser des aus dem Austrittsende, gegebenenfalls nach Kollimation, austretenden Strahls auf einen wirksamen Durchmesser des Strahlablenkers möglichst optimal anzupassen.

Zur Unterscheidung wird im weiteren das vorangehend beschriebene Teleskop, durch das sämtliche Strahlen verlaufen, als Sammelteleskop bezeichnet, und die Mehrzahl von Teleskopen, die jeweils den Strahlablenkern einzeln zugeordnet sind, wird als Einzelteleskope bezeichnet.

Ein ebenfalls wesentlicher aber nicht unumgänglicher Aspekt der Erfindung ist es, laterale Abmessungen der eingesetzten Strahlablenker größer auszulegen, als dies fertigungstechnisch eigentlich nötig ist. Insbesondere ist vorgesehen, eine Strecke b in der Ebene der Platte aus elektrooptischem Material, über die der Strahlablenker eine Phasenverschiebung des reflektierten Lichts von 2π bereitstellen kann, nicht kleiner zu wählen als durch die Formel

$$b > \lambda * \sqrt{(5/2 * 1/(n * \Delta n))}$$

angegeben ist. Bei Einhaltung dieser Bemessungsregel wird ein Übersprechen von einem Ausgangskanal auf einen anderen Ausgangskanal weitgehend vermieden.

Insbesondere zeigt sich dieser Aspekt bei einer Schaltanordnung, bei der ein Abstand zwischen einander benachbarten Anschlußenden kleiner ist als ein Abstand zwischen benachbarten Strahlablenkern. Fertigungstechnisch könnte beispielsweise die Auslegung der strukturierten Elektrodenanordnung weiter verringert werden, um den Abstand zwischen benachbarten Strahlablenkern dem Abstand zwischen den benachbarten Anschlußenden anzupassen, allerdings wird im Hinblick auf die Reduzierung des Übersprechens zwischen verschiedenen Ausgangskanälen der Abstand zwischen benachbarten Strahlablenkern größer gewählt als dies fertigungstechnisch bedingt ist. Allerdings wird der Abstand zwischen benachbarten Anschlußenden dann nicht dem Abstand zwischen den benachbarten Strahlablenkern angepaßt, sondern es wird der Abstand zwischen benachbarten Anschlußenden demgegenüber verringert, um einen maximal nötigen Ablenkwinkel der Strahlablenker und damit die Baulänge der Schaltanordnung zu verringern.

Ausführungsbeispiele der Erfindung werden nachfolgend anhand von Zeichnungen näher erläutert. Hierbei zeigt:

Figur 1     eine schematische geschnittene Teildarstellung einer Ausführungsform eines erfindungsgemäßen Strahlablenkers,

Figur 2     Graphen, die einen Phasenverlauf eines an dem Strahlablenker reflektierten Strahls in Abhängigkeit von einer Wellenlänge eines einfallenden Strahls erläutern,

Figur 3     eine schematische Darstellung zur Erläuterung eines an eine Elektrodenstruktur des Strahlablenkers der Figur 1 anzulegenden Spannungsmusters, um eine Strahlablenkung zu erzielen,

Figur 4     eine schematische Darstellung des Strahlablenkers der Figur 1 in Draufsicht zur Erläuterung von Elektrodenstrukturen zur Ablenkung des Strahls in zwei Raumrichtungen,

Figur 5     eine schematische Darstellung einer Schaltung zum Anlegen von Spannungen an die Elektroden des Strahlablenkers der Figur 1,

Figur 6     eine Ausführungsform einer erfindungsgemäßen Schaltanordnung zum wahlweisen Verknüpfen von Anschlüssen für optische Signale,

Figur 7     eine erläuternde Detaildarstellung der Schaltanordnung der Figur 6,

Figur 8     eine schematische Darstellung einer weiteren Ausführungsform des erfindungsgemäßen Strahlablenkers im Schnitt,

Figur 9     Graphen, die einen Verlauf der Reflektivität des Strahlablenkers der Figur 8 in Abhängigkeit von der Wellenlänge des einfallenden Strahls erläutern,

Figur 10    Graphen, die einen Phasenverlauf des an dem Strahlablenker der Figur 8 reflektierten Strahls in Abhängigkeit von der Wellenlänge des einfallenden Strahls erläutern,

Figur 11    eine Ausführungsform einer erfindungsgemäßen Elektrodenstruktur für einen Strahlablenker,

Figur 12    eine weitere Ausführungsform einer erfindungsgemäßen Schaltanordnung,

Figur 13    noch eine weitere Ausführungsform einer erfindungsgemäßen Schaltanordnung,

Figur 14    eine Variante für einen in der Schaltanordnung gemäß der Figuren 12 und 13 einsetzbaren Strahlablenker, und

Figur 15    eine Variante der in Figur 7 dargestellten Detaildarstellung.

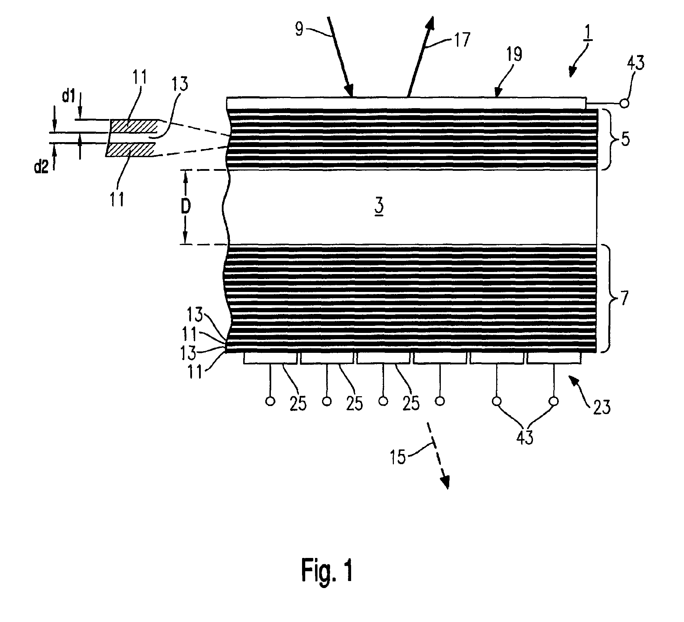

Anhand der Figuren 1 bis 4 wird eine erste Ausführungsform eines erfindungsgemäßen Strahlablenkers 1 erläutert.

Der Strahlablenker 1 weist den Aufbau eines optischen Resonators bzw. Etalons auf, wobei eine Platte 3 aus elektrooptischem Material zwischen zwei zueinander planparallelen Spiegeln 5 und 7 angeordnet ist. Als elektrooptisches Material wird im Rahmen dieser Anmeldung ein jedes Material bezeichnet, welches einen ausgeprägten, d.h. technisch nutzbaren elektrooptischen Effekt zeigt, d.h. ein Brechungsindex n des elektrooptischen Materials ist durch Anlegen eines elektrischen Feldes an dieses Material änderbar. Insbesondere ist hierzu der sog. lineare elektrooptische Effekt von der angelegten elektrischen Feldstärke von Interesse.

Das für diese Ausführungsform gewählte elektrooptische Material ist Lithiumniobat (LiNbO₃), für welches ein Brechungsindex von $n = 2,3$ angenommen ist, welches durch Anlegen einer geeigneten elektrischen Spannung von etwa 400 Volt an mit 100 um Abstand voneinander angeordnete Elektroden um $\Delta n = 5*10^{-4}$ änderbar ist.

Von den beiden Spiegeln 5, 7, zwischen denen die Platte 3 aus elektrooptischem Material eingebettet ist, weist der einem einfallenden Lichtstrahl 9 zuweisende in Fig. 1 obere Spiegel 5 eine geringere Reflektivität auf als der bezüglich der Platte 3 von dem einfallenden Lichtstrahl abgewandte untere Spiegel 7.

Ein jeder Spiegel 5, 7 ist hochreflektierend und mit niedriger Eigenabsorption ausgebildet, indem eine Mehrzahl von Schichten 11, 13 aus dielektrischem Material mit unterschiedlichen Brechungsindizes abwechselnd schichtweise aufeinander angeordnet ist. Als Material für die Schichten 11 mit hohem Brechungsindex ist in der hier beschriebenen Ausführungsform Titanoxid (TiO) verwendet, für welches ein Brechungsindex $n_H = 2,20$ angenommen wird, für die Schichten 13 mit niedrigem Brechungsindex ist in der vorliegenden Ausführungsform Siliziumoxid (SiO₂) verwendet, für welches ein Brechungsindex von $n_L = 1,48$ angenommen ist.

Die Zahl der abwechselnd angeordneten Schichten 11, 13 des oberen Spiegels 5 ist kleiner als die Zahl der Schichten 11, 13 aus denen der untere Spiegel 7 aufgebaut ist, so daß der untere Spiegel 7 eine höhere Reflektivität aufweist als der obere Spiegel 5. Vor allem unterscheiden sich die Resttransmissivitäten der beiden Spiegel 5, 7 so stark voneinander, daß lediglich ein äußerst geringer Intensitätsanteil 15 des einfallenden Strahls 9 das Etalon 1 in Transmission durchläuft und die wesentliche Intensität als abgelenkter Strahl 17 von dem Etalon 1 reflektiert wird.

Im Hinblick auf die hohe Güte des Resonators sind die Schichten 11, 13 aus dielektrischem Material mit einer Dicke d1 bzw. d2 ausgelegt, welche ein Viertel der Wellenlänge λ des einfallenden Strahls 9 in dem jeweiligen dielektrischen Material der Schicht entspricht.

Ebenso ist im Hinblick auf die Güte des Resonators eine Dicke D der Platte 3 aus elektrooptischem Material an die Wellenlänge λ des einfallenden Strahls 9 in dem elektrooptischen Material angepasst. Hierbei genügt die Dicke D vorzugsweise einer der beiden Formeln $D = k/2 * \lambda$ und $D = (2k-1)/4 * \lambda$, wobei λ die Wellenlänge des einfallenden Strahls in dem elektrooptischen Material und k eine natürliche Zahl größer 0 ist. Hierbei wird eine der beiden Formeln derart ausgewählt, daß in dem durch die Spiegel 5 und 7 gebildeten Resonator die darin mehrmals umlaufenden Teilstrahlen konstruktiv interferieren.

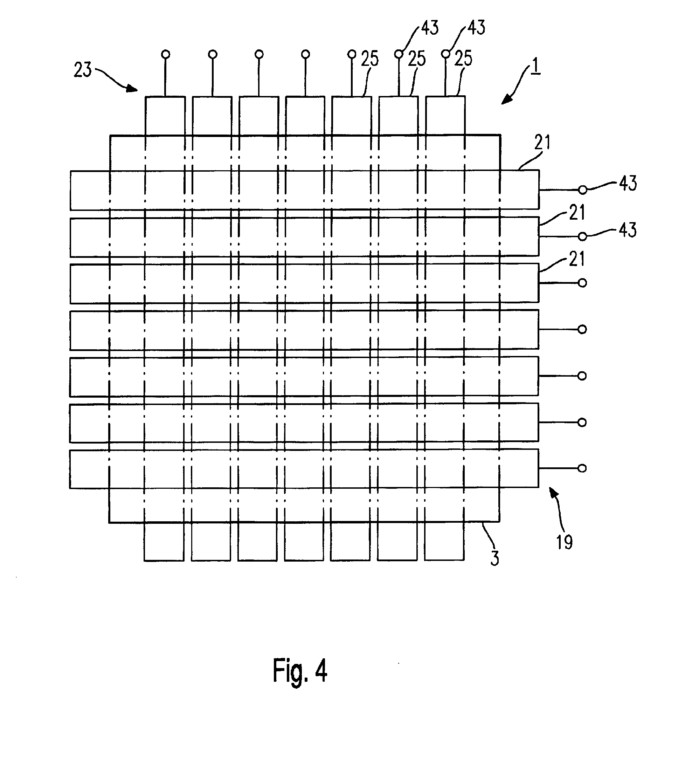

An das elektrooptische Material 3 können mittels zweier räumlich strukturierter Elektrodenanordnungen ortsabhängig elektrische Felder angelegt werden, um den Brechungsindex n des elektrooptischen Materials 3 ortsabhängig zu verändern. Eine obere Elektrodenanordnung 19 ist auf dem oberen Spiegel 5 aufgebracht und umfaßt eine Mehrzahl von sich parallel zueinander und mit Abstand voneinander erstreckenden Streifenelektroden 21, und die zweite Elektrodenanordnung 23 ist unter dem unteren Spiegel 7 an diesem angebracht und umfaßt eine Mehrzahl von sich ebenfalls parallel zueinander und mit Abstand voneinander erstreckenden Streifenelektroden 25 (vergleiche Figur 4). Die Erstreckungsrichtungen der Streifenelektroden 21 und 25 verlaufen in Projektion auf die Ebene der planparallelen Spiegel 5, 7 orthogonal zueinander, um mit dem Strahlablenker 1 den abgelenkten Strahl 17 in zwei Raumrichtungen ablenken zu können, wie dies nachfolgend beschrieben wird.

Zunächst sei angenommen, daß an die gesamte Platte 3 des elektrooptischen Materials über die Elektrodenanordnungen 19 und 23 ein im wesentlichen homogenes elektrisches Feld angelegt wird, um den Brechungsindex des elektrooptischen Materials zu ändern.

Da, wie vorangehend erläutert, im wesentlichen die gesamte Intensität des einfallenden Strahls 9 in den ausfallenden Strahl 17 reflektiert wird, zeigt die Reflektivität des Etalons 1, wenn diese in Abhängigkeit von der Wellenlänge λ des einfallenden Strahls untersucht wird, lediglich äußerst geringe Abweichungen von einer 100%igen Reflektivität R auf.

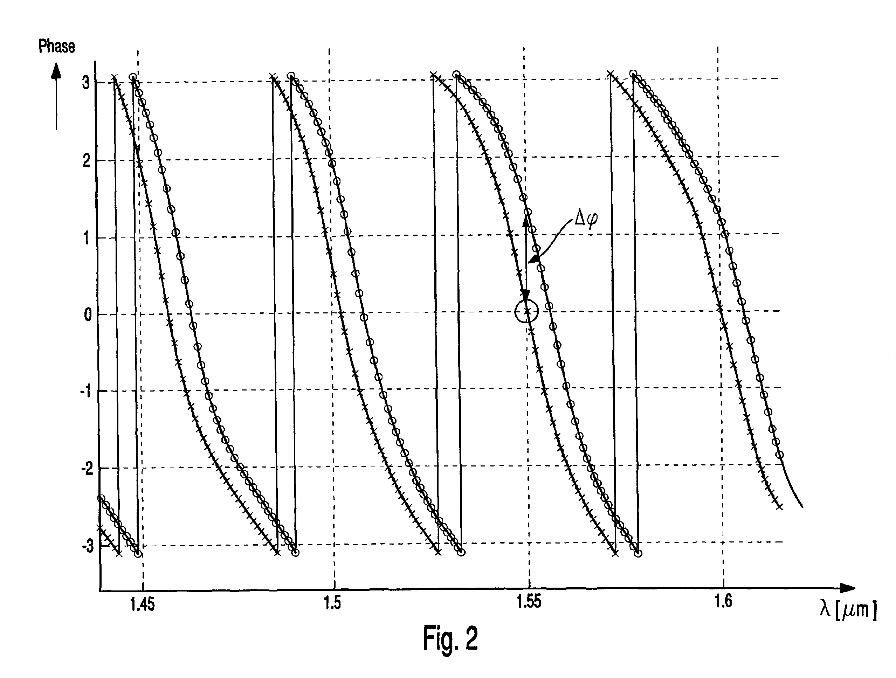

Anders ist dies, wenn die Phasenlage des reflektierten Strahls 17 in Bezug auf den einfallenden Strahl 9 in Abhängigkeit von der Wellenlänge λ des einfallenden Strahls 9 untersucht wird. Ein Graph dieses Phasenverlaufs ist in Figur 2 dargestellt, wobei als Buchstaben X dargestellte Punkte den Phasenverlauf markieren, wenn das elektrooptische Material keinem elektrischen Feld ausgesetzt ist, und wobei durch Kreise dargestellte Punkte den Phasenverlauf markieren, wenn der Brechungsindex des elektrooptischen Materials 3 durch Anlegen eines entsprechend gewählten Feldes von $n = 2,30$ auf $n + \Delta n = 2,31$ erhöht ist (Im Hinblick auf eine das Verständnis erleichternde Darstellung wurde hier für Δn ein Wert von 0,01 gewählt. In der Praxis werden niedrigere Werte verwendet, so daß vergleichsweise niedrige Spannungen zur Erzeugung der nötigen elektrischen Feldstärke ausreichend sind).

Der dargestellte Phasenverlauf wird erhalten, wenn für den oberen Spiegel 5 vier Doppelschichten aus Siliziumoxyd und Titanoxid mit jeweils einer Dicke $d1 = d2 = \lambda/4$ eingesetzt werden, wenn der untere Spiegel 7 aus 16 Doppelschichten aus Siliziumoxyd und Titanoxid mit Dicken $d1 = d2 = \lambda/4$ aufgebaut wird und wenn die Platte aus elektrooptischem Material eine Dicke $D = 14,5 \lambda$ aufweist.

Der Strahlablenker 1 ist im Hinblick auf eine vorbestimmte Wellenlänge (Design-Wellenlänge) $\lambda_0 = $

1,55μm derart ausgelegt, daß bei nicht angelegtem elektrischem Feld zwischen einfallendem Strahl 9 und reflektiertem Strahl 17 ein Phasenunterschied von 0 besteht. Durch Anlegen eines elektrischen Feldes derart, daß sich der Brechungsindex des elektrooptischen Materials 3 um $\Delta n = 0,01$ ändert, wird bei dieser Wellenlänge $\lambda_0$ dann, wie aus Figur 2 ersichtlich, zwischen einfallender und reflektierter Welle eine Phasendifferenz von etwa 1,4 erzeugt. Durch Anlegen größerer elektrischer Felder können auch größere Phasendifferenzen $\Delta \varphi$ erzeugt werden. Insgesamt kann mit dem beschriebenen Etalon 1 die Phasenlage zwischen dem einfallenden und dem ausfallenden Strahl 9, 17 bei der Designwellenlänge $\lambda_0$ über eine volle Periode von $-\pi$ bis $+\pi$ frei eingestellt werden.

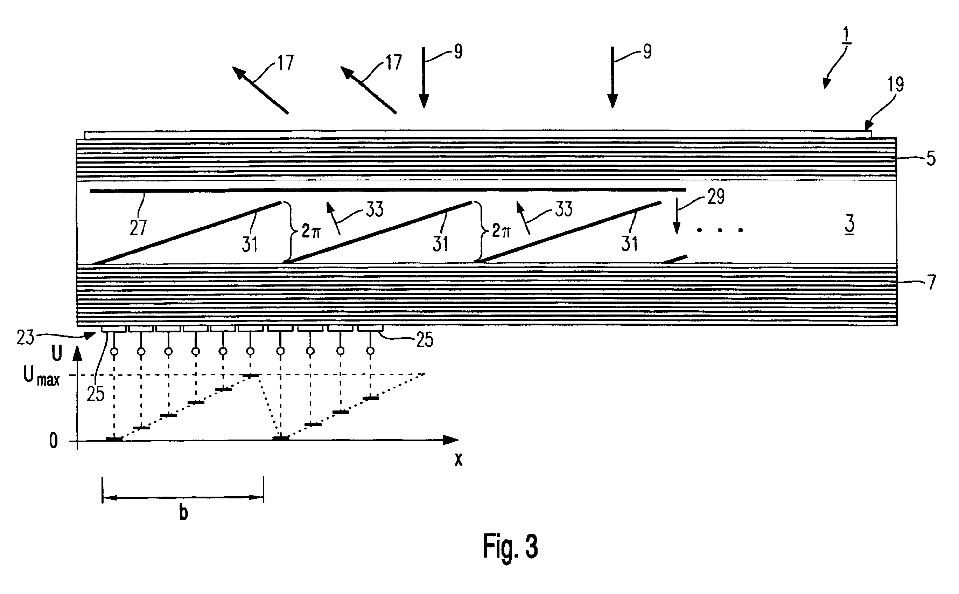

In Figur 3 ist eine Wellenfront des in das Etalon 1 eingedrungenen einfallenden Strahls 9 mit einer sich parallel zu den Spiegeln 5, 7 erstreckenden Linie 27 angedeutet, und eine Ausbreitungsrichtung der Wellenfront 27 ist durch einen Pfeil 29 angedeutet.

An die Elektrodenstruktur 23 wird über die Streifenelektroden 25 ein elektrisches Spannungsmuster angelegt, welches in eine x-Richtung quer zur Erstreckungsrichtung der Streifenelektroden 25 ortsabhängig einen Sägezahnverlauf aufweist. Entsprechend den angelegten Spannungen entsteht in dem elektrooptischen Medium 3 eine ortsabhängige Änderung des Brechungsindex, welcher in x-Richtung somit ebenfalls sägezahnförmig ist. Eine Differenz zwischen der an die Elektroden 25 angelegten kleinsten Spannung 0 und der an die Elektroden angelegten größten Spannung $U_{max}$ ist dabei so ausgewählt, daß die entsprechende Änderung des Brechungsindex n des elektrooptischen Materials an dem reflektierten Strahl 17 eine Phasendifferenz von nahezu $2\pi$ herbeiführt. Entsprechend stellt sich in dem Resonator die anfänglich in Spiegelrichtung orientierte Wellenfront 27 schräg ein, wie dies in Figur 3 durch Linien 31 dargestellt ist, wobei von einer Linie 31 zur nächsten ein Phasensprung von $2\pi$ auftritt. Aufgrund der Kippung der Wellenfronten 31 liegt die Ausbreitungsrichtung der Welle in dem Resonator 3 nicht mehr senkrecht zu den Spiegelflächen 5 und 7 sondern ebenfalls gekippt hierzu, wie dies durch Pfeile 33 in Figur 3 angedeutet ist. Entsprechend ist dann die Richtung des aus dem Strahlablenker 1 austretenden Strahls 17 bezüglich der Richtung des einfallenden Strahls 9 in x-Richtung abgelenkt.

Wie aus den vorangehenden Erläuterungen ersichtlich ist, stellt das Etalon 1 für den einfallenden Strahl 9 ein Phasengitter dar, welches, wenn die angelegten Spannungen ortsabhängig den Sägezahnverlauf aufweisen, ein "geblazetes" Phasengitter ist, mit dem gezielt Licht in vorbestimmte Raumrichtungen gebeugt werden kann.

Werden nun auch an die Streifenelektroden 21 der Elektrodenanordnung 19 ortsabhängig Spannungen angelegt, so ist es möglich, den Strahl ebenfalls in y-Richtung abzulenken.

In Fig. 3 ist auch eine Strecke b eingetragen, über die der Strahlablenker 1 eine Phasenänderung von $2\pi$ bereitstellt. Bei der in Fig. 3 dargestellten Ansteuerung entspricht diese Länge b der Breite von 6 Streifenelektroden 25. Die kleinste mit diesem Strahlablenker 1 realisierbare Länge b entspricht dem doppelten Abstand zwischen zwei Streifenelektroden 25, wenn die Elektrodenanordnung 23 derart angesteuert wird, daß an jeweils benachbarten Streifenelektroden 25 abwechselnd die Spannung 0 und Umax angelegt wird. Es ist nun denkbar, durch Verringerung des Abstands zwischen benachbarten Streifenelektroden 25 ebenfalls die minimale Strecke b zu verringern und damit ein Phasengitter noch höherer Gitterperiode und folglich höheren maximalen Ablenkwinkeln bereitzustellen, was fertigungstechnisch bei der beschriebenen Ausführungsform möglich wäre. Allerdings wird eine gerichtete und gezielte Ablenkung des einfallenden Strahls 9 mit besonderer Qualität dann erreicht, wenn ein durch die Ansteuerung realisierter minimaler Wert b größer ist als

$$\lambda * \sqrt{(5/2 * 1/(n * \Delta n))}.$$

Zum weiteren Verständnis des Betriebs der Elektrodenanordnungen 19 und 23 kann ebenfalls auf die US 4,639,091 Bezug genommen werden, deren Offenbarung hier durch Inbezugnahme voll umfänglich aufgenommen wird.

Der in Figur 1 dargestellte Strahlablenker kann beispielsweise hergestellt werden, indem die Platte 3 auf geeignete Weise aus einem Einkristall aus Lithiumniobat herausgeschnitten wird und sodann beidseits der Platte zunächst die Spiegel 5 und 7 schichtweise aufgedampft werden und abschließend über den Spiegeln 5 bzw. 7 die Elektrodenanordnungen 19 bzw. 23 angebracht werden.

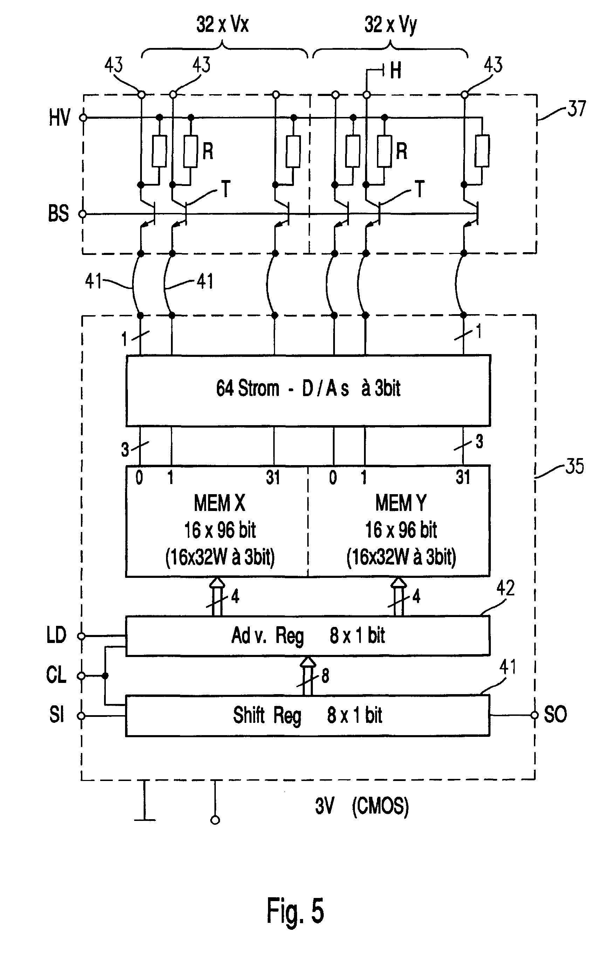

Figur 5 zeigt in schematischer Darstellung eine elektronische Schaltung, mit der zwei Elektrodenanordnungen mit jeweils 32 Sreifenelektroden mit Spannungsmustern versorgt werden können, um einen einfallenden Lichtstrahl 9 sowohl in x-Richtung als auch in y-Richtung in jeweils 32 voneinander verschiedene Raumrichtungen abzulenken. Die Schaltung umfaßt einen beispielsweise in CMOS-Technologie ausgelegten Niederspannungsteil 35 sowie einen Hochspannungsteil 37. Datenworte, die jeweils eine gewünschte Ablenkrichtung kodieren, werden über einen Eingang SI in ein Shiftregister 41 seriell eingelesen und parallel aus diesem in ein Adressregister 42 übernommen, wozu noch ein Takteingang CL und ein Ladebefehleingang LD vorgesehen sind. Die Schaltung umfaßt ferner zwei mit MEMX und MEMY bezeichnete Speicher, in welchen Spannungsmuster für an die Streifenelektroden 25 und 21 anzulegende Spannungen abgespeichert sind, um eine Strahlablenkung in die gewünschten Raumrichtungen zu erzeugen. Die Kodierung der in das Shiftregister 41 eingelesenen Worte ist dabei so gewählt, daß diese über das Adressregister 42 direkt verwendet werden kann, um das entsprechende Spannungsmuster in den Speichern MEMX bzw. MEMY zu adressieren. Die adressierten Spannungsmuster werden dann von den Speichern MEMX und MEMY an 64 Strom-Digital-Analog-Wandler übergeben, welche einer jeden Elektrode 21, 25 zugeordnet einen Strom auf Leitungen 41 ausgeben, welcher an den Hochspannungsteil 37 angeschlossen sind. Dort werden die gelieferten Ströme jeweils mittels Transistoren T und Widerständen R in eine entsprechende Hochspannung zwischen 0 und 400 Volt umgewandelt, welche dann an Anschlüssen 43 für die jeweiligen Streifenelektroden 21, 25 ausgegeben werden.

In Figur 5 bezeichnet BS noch eine Bias-Spannung für die Transistoren, und HV bezeichnet einen Anschluß zur Zuführung der Hochspannung.

Der vorangehend erläuterte Strahlablenker ist beispielsweise einsetzbar in einer Schaltanordnung zum wahlweisen Verknüpfen einer Mehrzahl von Eingängen bzw. Ausgängen für optische Signale, welche beispielsweise über Lichtleiter zu- bzw. abgeführt werden. Ein Beispiel für eine Schaltanordnung zum wahlweisen Verknüpfen optischer Fasern, die mit einem herkömmlichen Strahlablenker arbeitet, ist in US 5,963,682 beschrieben, deren Offenbarung durch Bezugnahme in dem vorliegenden Anmeldungstext voll umfänglich aufgenommen wird.

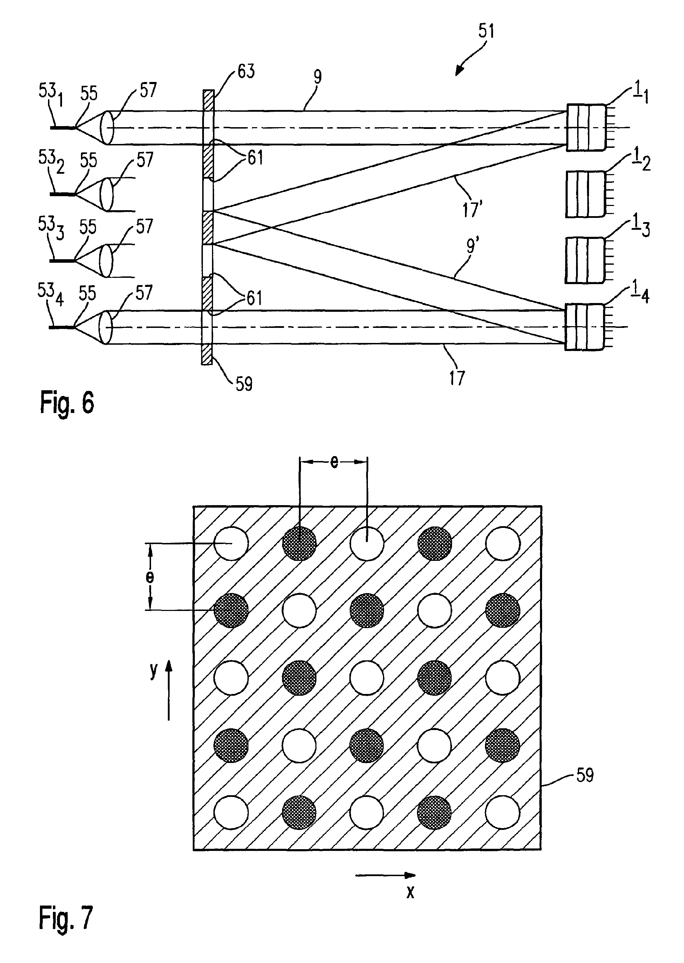

In den Figuren 6 und 7 ist eine Ausführungsform einer erfindungsgemäßen Schaltanordnung 51 schematisch in Teilansichten dargestellt. Eine Mehrzahl von Lichtleitfasern 53-1, 53-2, 53-3, 53-4 bilden die Anschlüsse für optische Signale der Schaltanordnung 51, wobei Anschlußenden 55 der Fasern 53 als ein zweidimensionales Feld mit einem in x-Richtung und y-Richtung gleichen Gitterabstand e angeordnet sind. Hierzu ist eine in den Figuren nicht dargestellte Halterung für die Faserenden vorgesehen, welche ebenfalls eine Mehrzahl von Kollimatorlinsen 57 derart trägt, daß vor jedem Faserende 55 eine Linse 57 angeordnet ist, um das aus dem Faserende 55 austretende Licht als parallelen Strahl 9 zu kollimieren bzw. einen auf die Linse 57 treffenden parallelen Strahl 17 in die entsprechende Faser 53 einzukoppeln.

Einem jeden Anschluss 53-1, 53-2, 53-3, 53-4 ist ein separater Strahlablenker 1-1, 1-2, 1-3, 1-4 derart zugeordnet, daß ein Feld von Strahlablenkern 1 mit Abstand von den Faserenden 55 so angeordnet ist, daß aus den Faserenden 55 austretende Strahlen 9 direkt auf einen ihnen zugeordneten Strahlablenker 1 treffen.

Zwischen dem Feld aus Faserenden 55 und Kollimationslinsen 57 und dem Feld aus Ablenkern 1 ist eine Platte 59 senkrecht zur Strahlrichtung angeordnet, welche ebenfalls mit dem Abstand e voneinander angeordnete Löcher 61 für den Durchtritt der Strahlen 9, 17 aufweist. Eine dem Feld aus Strahlablenkern 1 zugewandte Fläche 63 der Platte 59 ist verspiegelt.

In Figur 6 ist eine Schaltsituation der Schaltanordnung 51 dargestellt, bei der der in der Figur obere optische Anschluß $53_1$ als Eingang mit dem in der Figur unteren optischen Anschluß $53_4$ als Ausgang verknüpft ist. Hierzu wird die Elektrodenstruktur des in der Figur 6 oberen Strahlablenkers 1-1 derart angesteuert, daß der aus dem optischen Eingang 53-1 austretende Strahl 9 unter einem solchen Winkel als Strahl 17' reflektiert wird, daß der reflektierte Strahl 17' derart auf die verspiegelte Fläche 63 der Platte 59 trifft, daß er von dieser wiederum als Strahl 9' reflektiert wird und auf den in der Figur 6 unteren Strahlablenker 1-4 fällt, der dem optischen Ausgang 53-4 zugeordnet ist. Der untere Strahlablenker 1-4 wird dabei derart angesteuert, daß der auf ihn treffende Strahl 9' in den Strahl 17 reflektiert wird, der in den optischen Ausgang 53-4 eingekoppelt wird. Es ist somit die Faser 53-1 als optischer Eingang mit der Faser 53-4 als optischer Ausgang verknüpft bzw. verschaltet.

Es ist allerdings auch möglich, die Faser 53-1 als optischen Eingang mit der Faser 53-2 als optischen Ausgang zu verschalten, indem der Ablenker 1-1 derart angesteuert wird, daß der durch diesen Strahlablenker reflektierte Strahl 17' so auf die Spiegelfläche 63 gerichtet ist, daß der von der Spiegelfläche 63 reflektierte Strahl 9' auf den Strahlablenker 1-2 trifft, welcher dann wiederum derart angesteuert wird, daß der auf diesen einfallende Strahl 9' in die Faser 53-2 als optischer Ausgang eingekoppelt wird.

Es ist somit möglich, eine Vielzahl von Anschlüssen 53 der Schaltanordnung 51 frei wählbar miteinander zu verknüpfen, indem die den zu verknüpfenden Anschlüssen zugeordneten Strahlablenker 1 geeignet angesteuert werden.

In der in den Figuren 6 und 7 dargestellten Ausführungsform ist jeder zweite Anschluß 53 für den Betrieb als Eingang vorgesehen, und jeder zweite andere optische Anschluß 53 ist als Ausgang vorgesehen, wie dies in Figur 7 erläuternd dargestellt ist, in der die als optische Eingänge verwendeten Positionen der Anschlüsse 53 als schwarze Kreise und die als optische Ausgänge verwendeten Positionen der Anschlüsse 53 als weiße Kreise dargestellt sind.

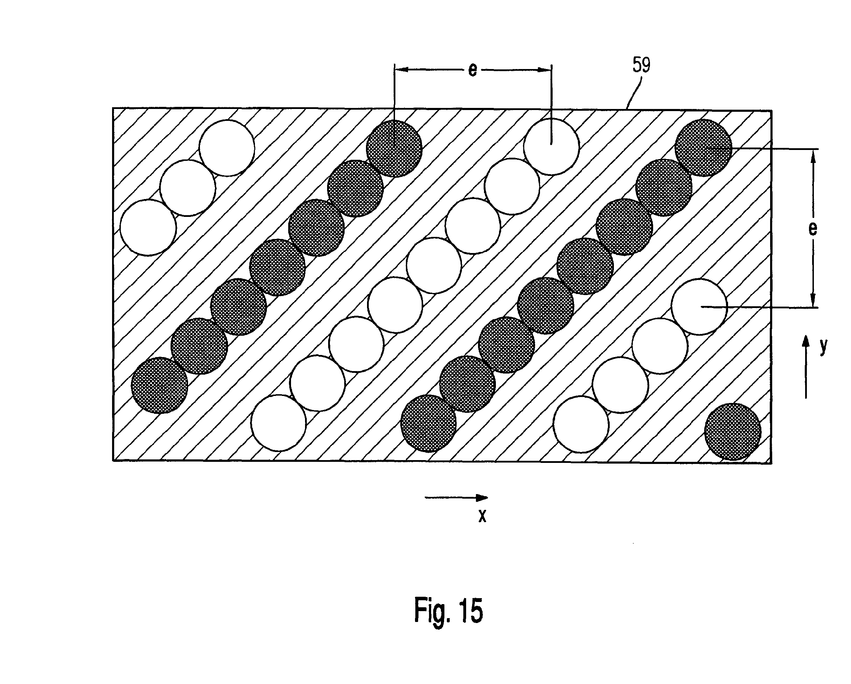

Es ist jedoch auch möglich, jeden Anschluß je nach Bedarf als Eingang oder Ausgang einzusetzen und Abstände zwischen benachbarten Anschlußenden abzuwandeln. Ein Beispiel hierfür ist in Figur 15 erläuternd dargestellt.

Im folgenden werden Varianten der in den Figuren 1 bis 7 dargestellten Ausführungsform der Erfindung erläutert. Hinsichtlich ihres Aufbaues und ihrer Funktion einander entsprechende Komponenten sind mit den Bezugszahlen aus den Figuren 1 bis 7 bezeichnet, zur Unterscheidung jedoch mit einem zusätzlichen Buchstaben versehen. Zur Erläuterung wird auf die gesamte vorangehende Beschreibung Bezug genommen.

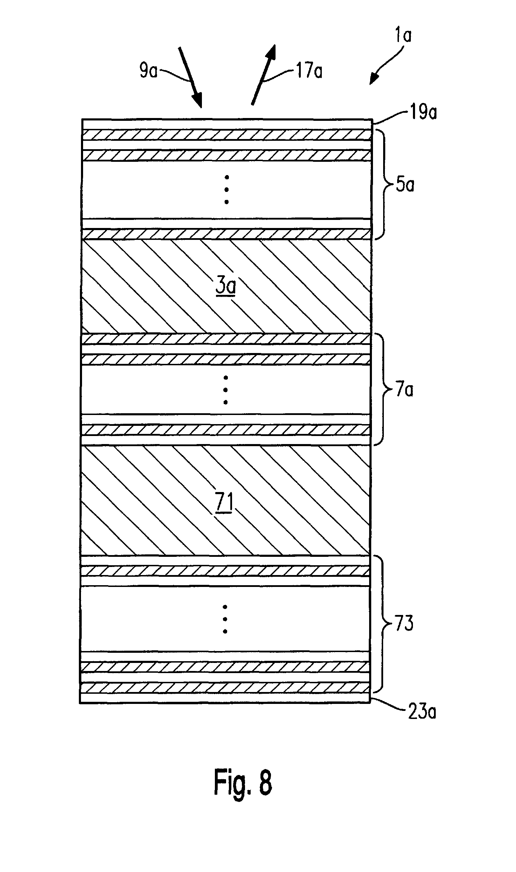

In Figur 8 ist ein Strahlablenker 1a schematisch dargestellt, der als Doppelresonator bzw. als Doppel-Etalon-Struktur aufgebaut ist. Ähnlich wie bei dem in Figur 1 gezeigten Etalon umfaßt der Ablenker 1a einen hochreflektierenden und aus Schichten dielektrischen Materials aufgebauten oberen Spiegel 5a, der einem einfallenden Strahl 9a zugewandt ist. Unter dem Spiegel 5a befindet sich eine Platte 3a aus elektrooptischem Material, welche nach unten durch einen weiteren Spiegel 7a abgegrenzt ist, der ebenfalls wieder aus einer Vielzahl von Schichten dielektrischen Materials aufgebaut ist.

Unterhalb des Spiegels 7a befindet sich eine zweite Platte 71 aus elektrooptischem Material, und unterhalb der zweiten Platte 71 befindet sich ein weiterer Spiegel 73 aus ebenfalls wiederum einer Mehrzahl von Schichten aus dielektrischem Material mit unterschiedlichem Brechungsindex.

Die Zahl der Schichten aus dielektrischem Material des unteren Spiegels 73 ist größer als die entsprechende Zahl des mittleren Spiegels 7a, welche wiederum größer ist als die Zahl der dielektrischen Schichten des oberen Spiegels 5a. Somit ist die obere Platte 3a aus elektrooptischem Material in einem durch die beiden Spiegel 5a und 7a gebildeten Resonator eingeschlossen, welcher eine geringere Güte aufweist als ein durch die Spiegel 7a und 73 gebildeter optischer Resonator, in dem die untere Platte 71 aus elektrooptischem Material eingeschlossen ist.

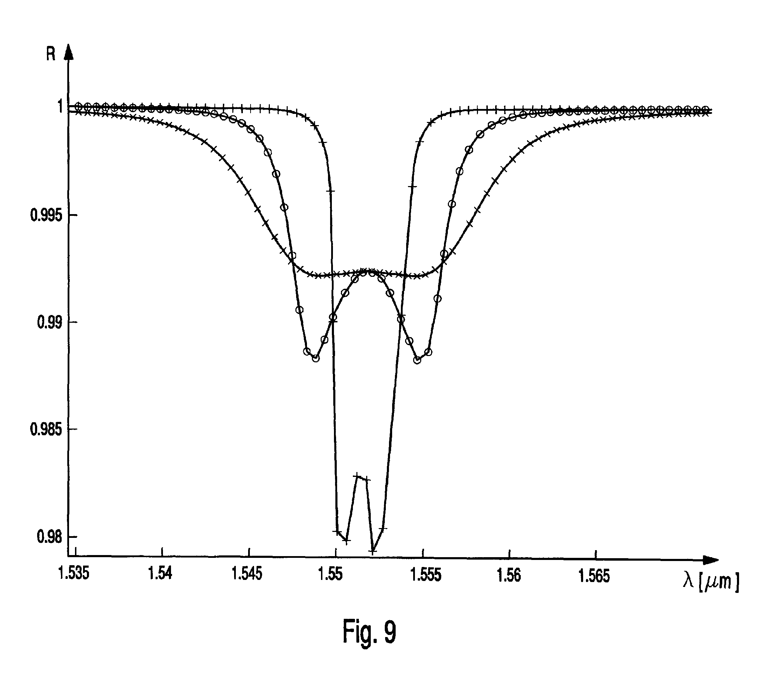

Die gesamte Struktur bestehend aus den Spiegeln 5a, 7a und 73 sowie den Platten 3a und 71 aus elektrooptischem Material ist zwischen Elektrodenanordnungen 19a und 23a eingeschlossen. Da auch bei der Etalonstruktur 1a bei beiden Resonatoren die rückwärtigen Spiegel wesentlich höher reflektierend ausgebildet sind als die jeweils vorderen Spiegel, wird auch hier der größte Teil der Intensität des einfallenden Strahls 9a als Strahl $17a_R$ reflektiert. Fig. 9 zeigt die Abhängigkeit der Reflektivität der in Fig. 8 dargestellten Struktur in Abhängigkeit von der Wellenlänge λ. Die durch Kreuze markierte Kurve stellt dabei den Verlauf für eine Struktur dar, bei der der Spiegel 5a 8 Schichten, der Spiegel 7a 12 Schichten und der Spiegel 73 22 Schichten aufweist. Die mit Kreisen markierte Kurve stellt den Verlauf für eine Struktur dar, bei der der Spiegel 5a 6 Schichten, der Spiegel 7a 8 Schichten und der Spiegel 73 22 Schichten aufweist. Die mit dem Buchstaben x gekennzeichnete Kurve stellt den Verlauf für eine Struktur dar, bei der der Spiegel 5a 4 Schichten, der Spiegel 7a 6 Schichten und der Spiegel 73 22 Schichten aufweist.

Es zeigt sich, daß für sämtliche Ausführungen der Verspiegelung die Reflektivität außerordentlich hoch ist.

Mit dieser Anordnung kann somit eine Phasenverschiebung von mehr als 2π auch bei Wellenlängen erreicht werden, die von der Designwellenlänge $λ_0$ verschieden sind, was insbesondere im Hinblick auf die Ablenkung des Strahls in zwei Raumrichtungen von Bedeutung ist.

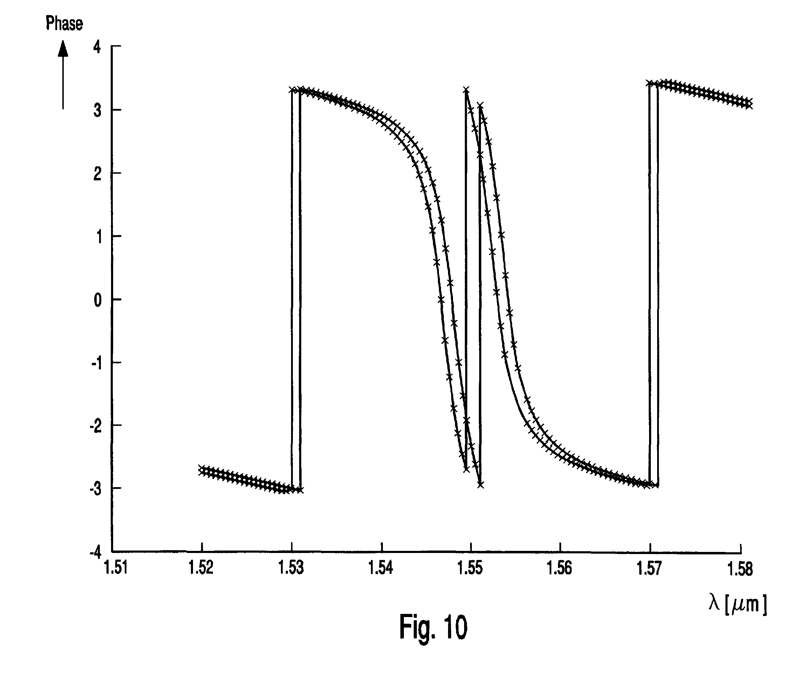

Fig. 10 ist eine der Fig. 2 entsprechende Darstellung der Phasendifferenz zwischen einfallendem und ausfallendem Strahl für die Etalonstruktur der Fig. 8 wobei die Spiegel 5a, 7a und 73 aus 6, 8 bzw. 22 Schichten aufgebaut sind und eine Dicke der Platten 3a und 71 14,5λ bzw. 10,5λ beträgt.

Der wesentliche Unterschied zwischen den Etalons der Fig. 1 und der Fig. 8 besteht darin, daß bei dem Strahlablenker 1a der Fig. 8 beide Resonatoren zur gesamten Phasendifferenz jeweils mit einer Phasendifferenz von maximal 2π beitragen können, sodaß mit dieser Doppelresonatoranordnung sehr einfach Phasendifferenzen von 4π erzeugt werden können.

Die in Figur 8 gezeigte Struktur 1a kann beispielsweise dadurch hergestellt werden, daß auf einem (in der Figur nicht dargestellten) Substrat zunächst die Elektrodenanordnung 23a abgeschieden wird und hierauf die Schichten des Spiegels 73 aufgedampft werden. Nach Fertigstellung des Spiegels 73 kann mittels MOCVD (metalorganic chemical vapor deposition) die Platte 71 aus elektrooptischem Material, wie etwa Lithiumniobat, aufgewachsen werden. Daraufhin wird der Spiegel 7a aufgedampft, es wird dann die Platte 3a aus Lithiumniobat wiederum mittels MOCVD aufgewachsen, schließlich der Spiegel 5a aufgedampft und abschließend die obere Elektrodenanordnung 19a gefertigt.

Mit Hilfe von MOCVD kann eine Vielzahl von elektrooptischen Materialien mit ausreichender Präzision und geforderter Materialstruktur abgeschieden werden, um die für die vorliegende Erfindung nötigen optischen Effekte erzielen zu können. Zur weiteren Erläuterung der MOCVD-Technik sei auf den Artikel von Ren Xu "The Challenge of Precursor Compounds in the MOCVD of Oxides", aus http:\\www.tms.org/pubs/journals/JOM/9710/Xu vom 16. Januar 2001, verwiesen, dessen Offenbarung in die vorliegende Anmeldung auch aufgenommen wird.

Auch der Doppelresonator 1a, dessen Phasenverlauf in Fig. 10 dargestellt ist, ist für eine Designwellenlänge $λ_0$ von 1,55µm konzipiert, wobei der Arbeitspunkt an der Designwellenlänge in dem Bereich des in der Fig. 10 dargestellten Phasensprungs gelegt ist.

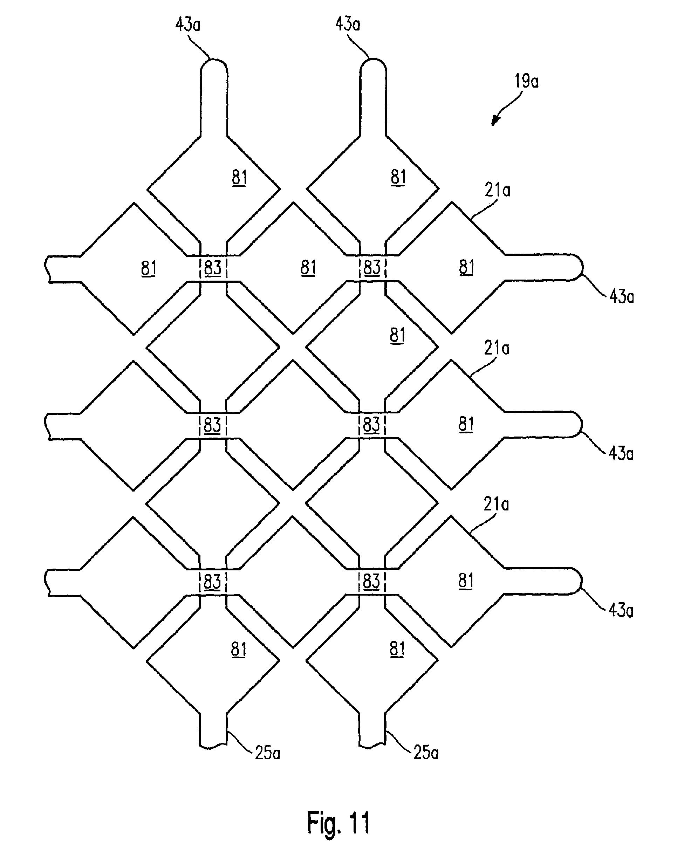

Fig. 11 erläutert eine Variante der oberen Elektrodenanordnung 19a für einen erfindungsgemäßen Strahlablenker. Hierbei ist die Elektrodenanordnung 19a nicht lediglich aus Streifenelektroden aufgebaut, die sich in nur eine Richtung parallel erstrecken. Vielmehr umfasst die Elektrodenanordnung zwei Sätze von Streifenelektroden, von denen sich ein Satz mit Streifenelektroden 21a in Fig. 11 in Horizontalrichtung erstreckt, und sich ein zweiter Satz von Streifenelektroden mit Streifen 25a in Fig. 11 vertikal erstreckt.

Ist eine Elektrodenanordnung 19a der in Fig. 11 gezeigten Art auf beispielsweise der Oberseite des Strahlablenkers der Fig. 1 vorgesehen, so ist es ausreichend, entsprechend auf der Unterseite des Strahlablenkers die Elektrodenanordnung 23 als kontinuierliche und durchgehende Masseelektrode auszubilden. Es kann gleichwohl der reflektierte Strahl in zwei Raumrichtungen abgelenkt werden. Diese Ausgestaltung der Elektrodenanordnung 19a hat den Vorteil, daß lediglich eine der beiden Elektrodenanordnungen struktiert ausgebildet werden muss.

Um eine gegenseitige Überlappung der als sich kreuzende Streifen ausgebildeten Elektroden zu vermeiden, weisen die Streifen 21a, 25a in ihrer Längsrichtung abwechselnd angeordnete breite Flächenbereiche 81 und schmale Flächenbereiche 83 auf, wobei sich kreuzende Streifen lediglich in schmalen Flächenbereichen 83 überlappen. Die breiten Flächenbereiche 81 sind im wesentlichen flächendeckend und nicht überlappend ausgebildet, sodaß die an diesen anliegenden elektrischen Potentiale auf die dielektrooptischen Materialien einwirken können. Die sich kreuzenden Bereiche 83 der Streifen 21a bzw. 25a sind elektrisch voneinander isoliert. Dies kann dadurch realisiert werden, daß der erste Teileelektrodensatz mit den Streifen 25a in einer Dünnschichttechnik ausgeführt wird, darauf eine Isolierschicht angeordnet wird und der andere Teilelektrodensatz mit Streifenelektroden 21a darüber angeordnet ist.

Es ist allerdings auch denkbar, die Streifenelektroden 21a des von dem elektrooptischen Material entfernt liegenden Teilelektrodensatzes mit in etwa gleichmäßig breiten Streifen auszuführen, da die Wirkung dieser Elektroden auf das elektrooptische Material in den Bereichen, in denen diese Streifen 21a mit den darunterliegenden Streifen 25a überlappen, durch die darunterliegenden Streifen 25a abgeschirmt sind, sodaß wirksame Bereiche der kontinuierlich breiten außenliegenden Streifenelektroden in etwa die Gestalt der in Fig. 11 gezeigten breiten Bereiche 81 aufweisen.

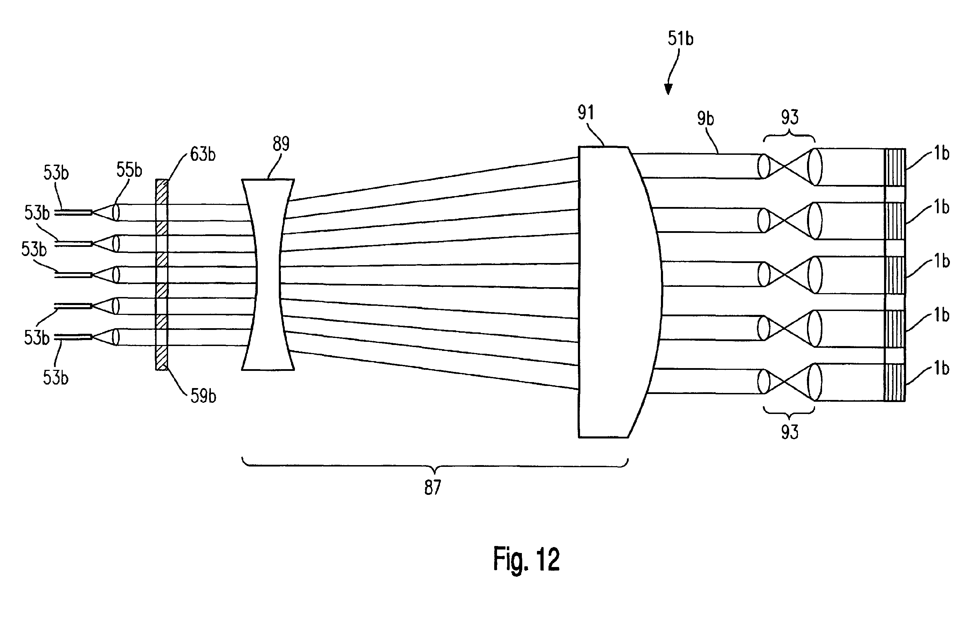

Eine in Fig. 12 gezeigte Schaltanordnung 51b zum wahlweisen Verknüpfen optischer Eingänge 53b weist einen Aufbau auf, der der in Fig. 6 gezeigten Anordnung ähnlich ist. Im Unterschied hierzu ist zwischen einem Feld von Strahlablenkern 1b und einer Platte 59b mit verspiegelter Seite 63b ein Sammelteleskop 87 angeordnet, welches schematisch durch eine Zerstreuungslinse 89 und eine Sammellinse 91 dargestellt ist. Sowohl durch die Sammellinse 91 als auch durch die Zerstreuungslinse 89 verlaufen sämtliche Strahlen zwischen den Anschlüssen 53b und den Strahlablenkern 1b. Das Teleskop 87 dient im wesentlichen zur Reduzierung der Baulänge der Schaltanordnung 51b im Vergleich zu der Baulänge, die bei der Schaltanordnung gemäß Fig. 6 bei vorgegebenem maximalen Ablenkwinkel der Strahlablenker gewählt werden muss.

Ferner umfasst die Schaltanordnung 51b noch eine Vielzahl von Einzelteleskopen 93 derart, daß vor einem jeden Strahlablenker 1b ein Einzelteleskop 93 angeordnet ist, welches einen durch eine Linse 55b vor dem Austrittsende der Faserenden 53b kollimierten Strahl 9b auf den Durchmesser anpasst, der die wirksame Fläche des Strahlablenkers 1b im wesentlichen vollständig ausleuchtet.

Aus Fig. 12 ist auch ersichtlich, daß ein Abstand zwischen benachbarten Faserenden 53b kleiner ist als ein Abstand zwischen benachbarten Strahlablenkern 1b. Zwar wäre es fertigungstechnisch möglich, den Abstand zwischen den benachbarten Strahlablenkern 1b weiter zu reduzieren, allerdings sind die einzelnen Strahlablenker 1b so ausgelegt, daß die vorangehend erläuterte Untergrenze für die Strecke in dem elektrooptischen Material, innerhalb welcher eine Phasenänderung von $2\pi$ erzeugt wird, eingehalten ist.

Die in Fig. 12 gezeigte Schaltanordnung 51b kann dahingehend abgewandelt werden, daß sowohl das große Teleskop 87 oder/und die Einzelteleskope 93 weggelassen werden können, so daß diese als solche optional sind.

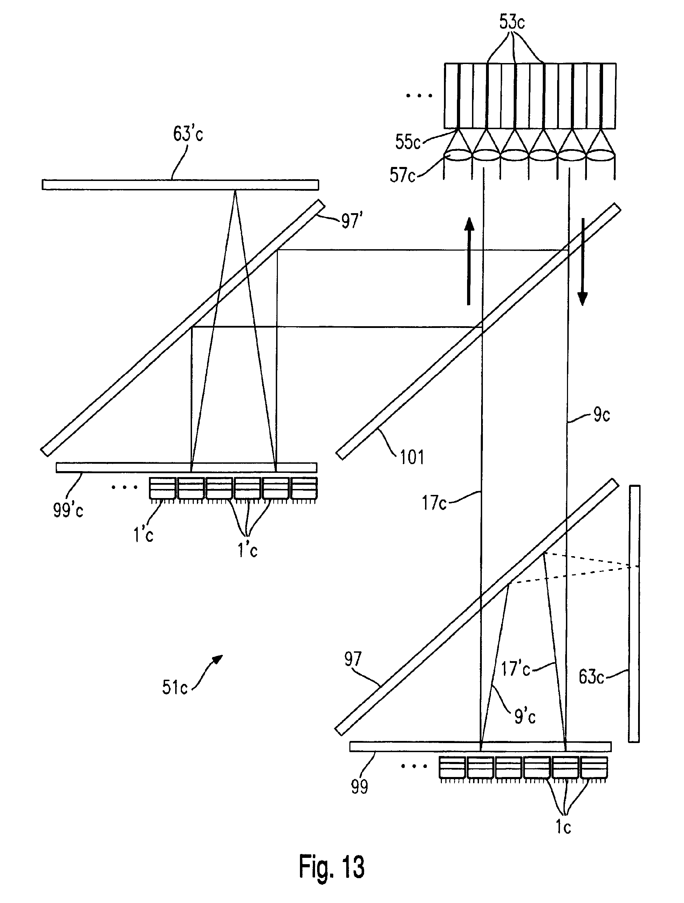

Eine in Fig. 13 gezeigte Schaltanordnung 51c dient wiederum der wahlweisen Verknüpfung einer mehrzahl optischer Ein- bzw-Ausgänge 53c mittels einer Mehrzahl von Strahlablenkern 1c, von denen ein jeder separat einem optischen Anschluss 53c zugeordnet ist. Kollimationslinsen 57c kollimieren die aus Faserenden 55c austretenden Strahlen jeweils auf die Strahlablenker 1c. Ähnlich wie bei der Ausführungsform gemäß Fig. 6 wird ein von einem Strahlablenker 1c reflektierter einfallender Strahl 9c in einen Strahl 17'c reflektiert, der von einem Spiegel 63c als Strahl 9'c auf dem Strahlablenker 1c reflektiert wird, der dem gewünschten Ausgangsanschluss zugeordnet ist. Allerdings ist der den Strahl 17'c in den Strahl 9'c zurück reflektierende Spiegel 63c nicht, wie in Fig. 6, an einer Lochplatte ausgebildet. Der Spiegel 63c steht vielmehr außerhalb des Strahlenverlaufs zwischen den Kollimatorlinsen 57c und den Strahlablenkern 1c, wozu ein halbdurchlässiger Auskoppelspiegel 97 vorgesehen ist. Diesen Auskoppelspiegel 97 durchlaufen die Strahlen 9c und 17c zwischen den Kollimatorlinsen 57c und den Strahlablenkern 1c, weshalb dieser Auskoppelspiegel 97 auf diese Strahlen polarisierend wirkt und lediglich die durch den Spiegel 97 transmittierten polarisierten Teile der Strahlen 9c und 17c nach einer Polarisationsdrehung an einer $\lambda$-Viertelplatte 99 von dem Spiegel 97 dann auf den außerhalb des Strahlengangs angeordneten Spiegel 63 reflektiert werden.

Da das Auskoppeln der an dem Spiegel 63c zu reflektierenden Strahlen durch den polarisierenden Spiegel 97 einen Verlust der halben Intensität (auf Grund der polarisierenden Wirkung) mit sich bringt, ist ein weiterer polarisierneder Strahlteiler 101 zwischen den Kollimatorlinsen 57c und dem Spiegel 97 vorgesehen, um den Polarisationanteil, der an dem Spiegel 97 verloren gehen würde, auszukoppeln und auf ein weiteres Feld von Strahlablenkern 1'c zu lenken. Diese werden derart angesteuert, daß sie die gleichen optischen Ein- bzw- Ausgänge 53c miteinander verknüpfen, die auch über die Strahlablenker 1c miteinander verknüpft sind. Hierzu reflektieren die Strahlablenker 1'c die auf sie einfallenden Strahlen auf einen dem Spiegel 63c entsprechenden Spiegel 63'c. Ebenso ist zwischen dem Spiegel 63'c und den Strahlablenkern 1'c ein schräggestellter halbdurchlässiger und ebenfalls polarisierender Spiegel 97' angeordnet, der dem Spiegel 97 entspricht, wie auch vor dem Strahlablenkern 1c' eine $\lambda$-Viertelplatte 99' angeordnet ist.

Insgesamt ist die Schaltanordnung 51c' so ausgelegt, daß die optischen Weglängen für beide Polarisationsrichtungen im wesentlichen gleich lang sind, so daß auch kurze optische Pulse, die über den Spiegel 101 in ihre beiden Polarisationsrichtungen zerlegt werden, nach Ablenkung an den Strahlablenkern 1c bzw. 1'c an dem Spiegel 101 wieder im wesentlichen zeitrichtig zusammengeführt werden.

In den vorangehend erläuterten Ausführungsformen wurden als elektrooptisches Material Lithium-Niobat eingesetzt. Es ist jedoch auch möglich, Galiumarsemid (GaAs) als elektrooptisches Material einzusetzen, für welches ein Brechungsindex n = 3,5 angenommen wird. Es empfiehlt sich dann, die dielektrischen Schichten für die Resonatorspiegel aus abwechselnd Aluminiumarsenid (AlAs), für welches ein Brechungsindex $N_L$ = 3,0 angenommen wird, und Galiumarsenid ($n_H$ = 3,5) aufzubauen. Auch Galiumarsenid zeigt einen elektrooptischen Effekt, d. h. eine Änderung des Brechungsindex in Abhängigkeit von einem angelegten elektrischen Feld. Hierbei kann die verstärkende Wirkung des elektrooptischen Effekts durch den Einsatz sogenannter "quantum well"-Strukturen in dem Galiumarsenid ausgenützt werden. Diese Technologie ist in US 4,525,687 beschrieben, deren Offenbarung diesbezüglich in den vorliegenden Anmeldungstext vollumfänglich einbezogen wird.

Der Einsatz von Halbleitern als Materialien für die Platte aus elektrooptischem Material ist insbesondere auch deshalb vorteilhaft, da bei solchen Halbleitermaterialien zur Erhöhung des elektrooptischen Effekts physikalische Effekte wie der "quantum confined stark effect" und der "Franz-Keldisch-Effekt" eingesetzt werden können.

In den vorangehend beschriebenen Ausführungsformen umgreifen die Elektrodenanordnungen sowohl die Platten aus elektrooptischem Material als auch die Spiegel aus Schichten aus dielektrischem Material. Es ist jedoch auch denkbar, daß die Elektrodenanordnungen zwischen der Platte aus elektrooptischem Material und den Schichtspiegeln angeordnet sind. Hierdurch kann zum einen ein geringerer Elektrodenabstand im Hinblick auf eine Erhöhung der elektrischen Feldstärke erreicht werden. Andererseits können hierdurch auch Kriechströme vermieden werden, die möglicherweise in den Spiegelschichten erzeugt werden. Im Hinblick darauf, Absorptionsverluste an den Elektrodenanordnungen zu verringern, können diese dann weiter derart in dem Resonator angeordnet werden, daß sie von den Resonatorspiegeln einen solchen Abstand aufweisen, daß sie in Schwingungsknoten des Lichtfeldes liegen.

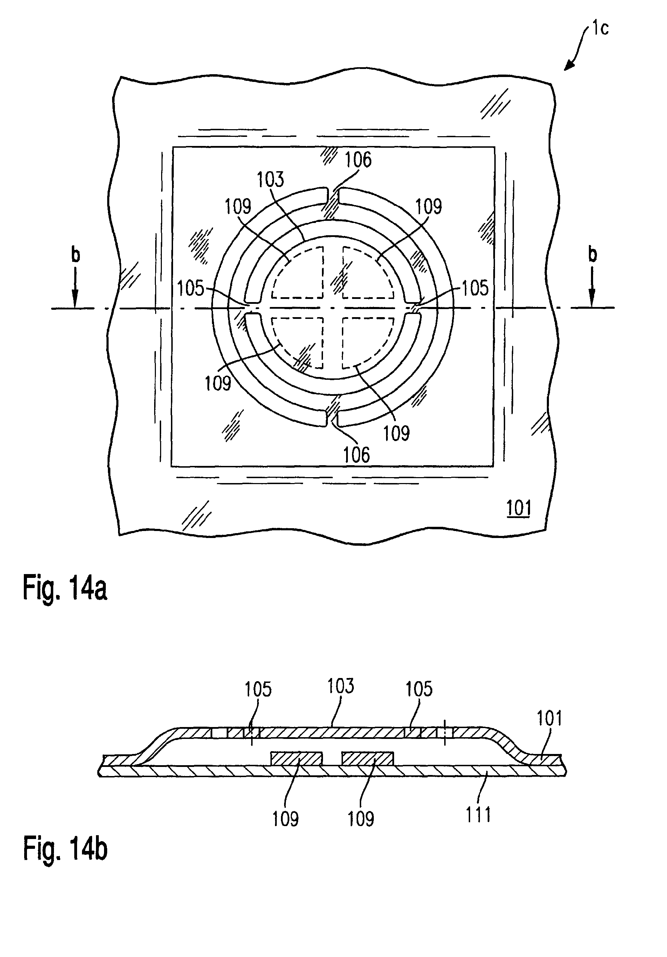

Bei den in dem Zusammenhang mit den Figuren 12 und 13 vorangehend beschriebenen Ausführungsformen sind die Strahlablenker von einem Aufbau, wie er anhand der Figuren 1 bis 11 erläutert wurde. Es ist jedoch auch möglich, die in den Figuren 12 und 13 gezeigten optischen Schaltanordnungen mit Strahlablenkern auszustatten, die jeweils einen bezüglich einer Spiegelhalterung mechanisch verschwenkbaren Spiegel umfassen. Derartige Strahlablenker sind miniaturisiert herstellbar und beispielsweise in dem Artikel von James A. Walker "The future of MEMS in telecommunications networks" aus Journal Michromech. Microeng. 10 (2000) R1-R7/PII: S0960-1317(00)06735-8 beschrieben. Figur 14 zeigt einen als sog. MEM-Spiegel ausgeführten Strahlablenker 1c schematisch. Aus einem Plattenmaterial 101 ist eine kreisförmige Spiegelfläche 103 freigestantzt, wobei einander bezüglich der Spiegelfläche diametral gegenüberliegende Paare von Gelenken 105 bzw. 106 die Spiegelfläche 103 bezüglich dem restlichen Plattenmaterial 101 kardanisch aufgehängt haltern. Unter der Spiegelfläche 103 sind in vier Sektoren Ansteuerelektroden 109 mit einem geringen Abstand von der Spiegelrückseite auf einem Elektrodenträger 111 angeordnet, welcher mit dem die Spiegelfläche 103 halternden Plattenmaterial fest verbunden ist. Durch Anlegen entsprechend bemessener elektrischer Spannungen an die Sektorelektroden 109 ensteht zwischen dem Spiegel 103 und den Elektroden ein elektrostatisches Feld, welches mechanische Verstellkräfte auf die Spiegelfläche 103 ausübt, so daß diese um die Gelenkstege 105 bzw. 106 verschwenkt wird, um die Spiegelfläche 103 bezüglich ihrer Halterung zu neigen und einen gewünschten Ablenkwinkel für auftreffende Lichtstrahlen einzustellen.

**Patentansprüche**

1. Strahlablenker zum Ablenken eines einfallenden Lichtstrahls (9, 9') einer vorbestimmten Wellenlänge ($\lambda$), umfassend eine zwischen einem Paar von Elektrodenanordnungen (19, 23) und einem Paar von zueinander planparallelen Spiegeln (5, 7) angeordnete erste Platte (3) aus elektrooptischem Material, dessen Brechungsindex (n) durch Anlegen elektrischer Spannungen an die Elektrodenanordnungen (19, 23) änderbar ist, wobei ein dem einfallenden Lichtstrahl (9, 9') zugewandter erster Spiegel (5) des Spiegelpaars eine geringere Reflektivität aufweist als der zweite Spiegel (7) des Spiegelpaars, **dadurch gekennzeichnet, daß** der erste oder/und der zweite Spiegel eine Mehrzahl von Schichten (11, 13) aus dielektrischen Materialien aufweist, wobei sich Brechungsindizes ($n_H$, $n_L$) der dielektrischen Materialien benachbarter Schichten (11, 13) voneinander verschieden sind.

2. Strahlablenker nach Anspruch 1, wobei mehrere Schichten (11, 13) jeweils eine Schichtdicke ($d_1$, $d_2$)

aufweisen, die im wesentlichen einem Wert (d) entsprechen, der der Formel d = λ/4 genügt, wobei λ die Wellenlänge des einfallenden Strahls in dem dielektrischen Material der Schicht ist.

3.  Strahlablenker nach Anspruch 2, wobei die erste Platte (3) aus dem elektrooptischen Material eine Dicke aufweist, die im wesentlichen einem Wert D entspricht, der einer der beiden Formeln D = k/2 * λ und D = (2k-1)/4 * λ genügt, wobei λ die Wellenlänge des einfallenden Strahls in dem elektrooptischen Material und k eine natürliche Zahl grösser 0 ist.

4.  Strahlablenker nach einem der Ansprüche 1 bis 3, wobei für die Spiegelschichten (11, 13) zwei verschiedene dielektrische Materialien vorgesehen sind, die alternierend schichtweise aufeinander angeordnet sind.

5.  Strahlablenker nach einem der Ansprüche 1 bis 4, wobei der zweite Spiegel (7) im wesentlichen vollständig reflektierend ausgebildet ist und eine Resttransmissivität des zweiten Spiegels (7) höchstens ein zehntel einer Resttransmissivität des ersten Spiegels 5 beträgt.

6.  Strahlablenker nach einem der Ansprüche 1 bis 5, wobei der zweite Spiegel (7) wenigstens sechs, insbesondere wenigstens acht, Schichten aufweist.

7.  Strahlablenker nach einem der Ansprüche 1 bis 5, wobei der zweite Spiegel (7) wenigstens zwanzig Schichten aufweist.

8.  Strahlablenker nach einem der Ansprüche 1 bis 6, wobei eine zweite Platte (71) aus elektrooptischem Material vorgesehen ist, welche zwischen dem zweiten Spiegel (7a) und einem zu dem zweiten Spiegel (7a) planparallen dritten Spiegel (73) angeordnet ist.

9.  Strahlablenker nach Anspruch 8, wobei der dritte Spiegel (73) eine höhere Reflektivität aufweist als der zweite Spiegel (7a).

10. Strahlablenker nach Anspruch 8 oder 9, wobei der dritte Spiegel (73) eine Mehrzahl von Schichten aus dielektrischen Materialien aufweist und sich Brechungsindizes der dielektrischen Materialien benachbarter Schichten voneinander verschieden sind.

11. Strahlablenker nach Anspruch 10, wobei der dritte Spiegel wenigstens zwanzig Schichten aufweist.

12. Strahlablenker nach einem der Ansprüche 8 bis 11, wobei die zweite Platte (73) aus elektrooptischem Material eine Dicke aufweist, die im wesentlichen einem Wert D entspricht, der einer der beiden Formeln D = k/2 * λ und D = (2k+1)/4 * λ genügt, wobei λ die Wellenlänge des einfallenden Strahls in dem elektrooptischen Material der zweiten Platte und k eine natürliche Zahl grösser 0 ist.

13. Strahlablenker nach einem der Ansprüche 8 bis 12, wobei die erste und die zweite Platte (3a, 71) aus elektrooptischem Material gemeinsam zwischen dem Paar von Elektrodenanordnungen (19a, 23a) angeordnet sind.

14. Strahlablenker nach einem der Ansprüche 1 bis 13, wobei der Strahlablenker zur Ablenkung von Licht einer Wellenlänge (λ) ausgebildet ist, welche in einem Wellenlängenbereich von 0,5 µm bis 3,0 µm, vorzugsweise von 1,0 µm bis 2,0 µm und stärker bevorzugt von 1,3 µm bis 1,7 µm, liegt.

15. Strahlablenker nach einem der Ansprüche 1 bis 14, wobei das elektrooptische Material ein elektrooptisches Festkörpermaterial, insbesondere Lithiumniobat (LiNbO$_3$) oder/und Galliumarsenid (GaAs), oder/und einen Flüssigkristall umfaßt.

16. Strahlablenker nach einem der Ansprüche 1 bis 15, wobei das dielektrische Material Siliziumdioxid (SiO$_2$) oder/und Titanoxid (TiO) oder/und Galliumarsenid (GaAs) oder/und Aluminiumarsenid (AlAs) oder/und Aluminiumgalliumarsenid (AlGaAs) umfaßt.

17. Strahlablenker nach einem der Ansprüche 1 bis 16, wobei die Elektrodenanordnungen (19, 21) jeweils eine Mehrzahl von parallel nebeneinander angeordneten Streifenelektroden (21, 25) aufweisen, wobei Erstreckungsrichtungen der Streifen (21, 25) der beiden Elektrodenanordnungen (19, 21) sich quer, insbesondere orthogonal, zueinander erstrekken.

18. Strahlablenker zum Ablenken eines einfallenden Lichtstrahls, insbesondere nach einem der Ansprüche 1 bis 17, umfassend eine zwischen einem Paar von Elektrodenanordnungen (19a, 23a) und einem Paar von zueinander planparallelen Spiegeln (5a, 7a) angeordnete erste Platte (3a) aus elektrooptischem Material, dessen Brechungsindex durch Anlegen elektrischer Spannungen an die Elektrodenanordnungen (19a, 23a) änderbar ist, **dadurch gekennzeichnet, daß** eine erste der beiden Elektrodenanordnungen (19a) zwei Sätze von Streifenelektroden (21a, 25a) aufweist, wobei die Streifenelektroden (21a, 25a) jedes Streifenektrodensatzes parallel nebeneinander angeordnet sind und Erstreckungsrichtungen der Streifenelektroden (21a, 25a) verschiedener Streifenelektrodensätze sich quer, insbesondere orthogonal, zueinander erstrekken.

**19.** Strahlablenker nach Anspruch 18, wobei eine jede Streifenelektrode (21a, 25a) - gesehen in der Spiegelebene - entlang ihrer Länge in Erstreckungsrichtung eine Mehrzahl von abwechseld breiten Bereichen (81) und schmalen Bereichen (83) derart aufweist, daß die Streifenelektroden (21a, 25a) verschiedener Streifenelektrodensätze sich mit den schmalen Bereichen kreuzend überlappen.

**20.** Strahlablenker nach Anspruch 19, wobei die breiten Bereiche (81) der Streifenelektroden (21a, 25a) verschiedener Streifenelektrodensätze im wesentlichen nicht überlappend angeordnet sind.

**21.** Strahlablenker nach einem der Ansprüche 18 bis 20, wobei die zweite Elektrodenanordnung (23a) des Paars Elektrodenanordnungen eine den Streifenelektroden (21a, 25a) gegenüberliegende Masseelektrode (23a) ist.

**22.** Schaltanordnung, umfassend:

ein Mehrzahl von Anschlüssen (53) für optische Signale, mit Anschlußenden (55) zum Austritt oder/und Eintritt der optischen Signale als Lichtstrahlen (9, 17), wobei die Anschlußenden (53) mit Abstand voneinenander an vorbestimmten Positionen angeordnet sind, und eine Mehrzahl von Strahlablenkern (1), wobei die Strahlablenker (1) und die Anschlußenden (55) einander paarweise zugeordnet sind und ein jeder Strahlablenker (1) derart angeordnet ist, daß der aus dem ihm zugeordneten Anschlußende (55) austretende Lichtstrahl (9) auf diesen gerichtet ist, und von denen ein jeder derart ansteuerbar ist, daß er wenigstens einen Teil (17) des auf ihn gerichteten Lichtstrahls (9) in eine auswählbare Richtung lenkt, um ihn in wenigstens ein ausgewähltes Anschlußende (55) eintreten zu lassen,

und wobei die Schaltanordnung ferner wenigstens einen Spiegel (63) umfaßt, wobei ein jedes Paar $(1_1, 1_4)$ von Strahlablenkern (1) derart ansteuerbar ist, daß der von einem ersten Strahlablenker $(1_1)$ des Paars austretende Lichtstrahl (17) nach aufeinanderfolgenden Reflexionen an dem ersten Strahlablenker $(1_1)$, dem Spiegel (63) und dem zweiten Strahlablenker $(1_4)$ des Paars in das dem zweiten Strahlablenker $(1_4)$ zugeordnete Anschlußende $(53_4)$ eintritt,

und wobei der Spiegel eine Mehrzahl von Spiegelflächen (63) umfaßt, die in Lücken zwischen Strahlquerschnitten zweier Lichtstrahlen (9, 17), die aus jeweils verschiedenen Anschlußenden (55) austreten, fest angeordnet sind.

**23.** Schaltanordnung nach Anspruch 22, wobei der Spiegel (63) zur Bereitstellung der einzelnen Spiegelflächen eine zusammenhängende Spiegelfläche aufweist, welche eine Vielzahl von Ausnehmungen (61) für den Durchtritt der Lichtstrahlen (9, 19) aufweist.

**24.** Schaltanordnung nach einem der Ansprüche 22 bis 23, wobei ein Abstand zwischen einander benachbarten Anschlußenden geringer ist als ein Abstand zwischen einander benachbarten Strahlablenkern.

**25.** Schaltanordnung nach einem der Ansprüche 22 bis 24, wobei zwischen den Anschlußenden (55b) und den Strahlablenkern (1b) ein Sammelteleskop (87) mit wenigstens einer Linse (89, 91) angeordnet ist, die von den aus sämtlichen Austrittsenden (55b) austretenden Strahlen (96) durchsetzt wird.

**26.** Schaltanordnung nach einem der Ansprüche 22 bis 25, wobei einem jeden Strahlablenker (1b) ein separates Einzelteleskop (93) zugeordnet ist, das zwischen dem Strahlablenker (1b) und dem diesem zugeordneten Anschlußende (53b) angeordnet ist.

**27.** Schaltanordnung nach einem der Ansprüche 22 bis 26, wobei der Strahlablenker den Strahlablenker nach einem der Ansprüche 1 bis 21 umfaßt.

**28.** Schaltanordnung nach Anspruch 27, wobei in der Ebene der Platte aus elektrooptischem Material eine kürzeste Länge, über die der Strahlablenker eine Phasenverschiebung des reflektierten Lichtstrahls von $2\pi$ bereitstellen kann, im wesentlichen einem Wert b entspricht, der der Formel $b > (5/2 * 1/(n*\Delta n))^{(1/2)} * \lambda$ genügt, wobei n der Brechungsindex des elektrooptischen Materials, $\Delta n$ eine Brechungsindexänderung des elektrooptischen Materials zur Erzielung eine Phasenänderung von $2\pi$ und $\lambda$ die Wellenlänge des einfallenden Strahls in dem elektrooptischen Material ist.

**29.** Schaltanordnung nach einem der Ansprüche 22 bis 26, wobei der Strahlablenker einen einen bezüglich einer Spiegelhalterung mechanisch verschwenkbaren Spiegel umfaßt.

**30.** Verfahren zum wahlweisen paarweisen Verknüpfen von Anschlüssen für optische Signale mittels der Schaltanordnung nach einem der Ansprüche 22 bis 29, wobei die beiden dem Paar zu verknüpfender Anschlüsse zugeordneten Strahlablenker derart angesteuert werden, daß der aus dem Anschlußen-

**EP 1 225 474 A2**

de des einen Anschlusses des Paars austretende Strahl in das Anschlußende des anderen Anschlusses eintritt.

Fig. 1

Fig. 2

Fig. 3

Fig. 4

Fig. 5

Fig. 6

Fig. 7

Fig. 8

Fig. 9

Fig. 10

EP 1 225 474 A2

Fig. 11

Fig. 12

Fig. 13

Fig. 14a

Fig. 14b

Fig. 15

EP 1 225 474 A2